# EUROPÄISCHE PATENTSCHRIFT

(11) **EP 3 569 973 B1**
(45) Veröffentlichungstag und Bekanntmachung des Hinweises auf die Patenterteilung: **20.01.2021**
(21) Anmeldenummer: 19180224.8
(22) Anmeldetag: 11.12.2015
(51) Int. Cl.: G01B 5/012, G01B 11/00, G01B 11/245

(54) **KOORDINATENMESSGERÄT UND VERFAHREN ZUR MESSUNG VON MERKMALEN AN WERKSTÜCKEN**
COORDINATE MEASURING MACHINE AND METHODS FOR MEASURING FEATURES OF WORKPIECES
MACHINE DE MESURE DE COORDONNÉES ET PROCÉDÉS DE MESURE DE CARACTÉRISTIQUES SUR DES PIÈCES

(30) Priorität: 12.12.2014 DE 102014118525; 30.07.2015 DE 102015112521; 19.11.2015 DE 102015120060
(43) Veröffentlichungstag der Anmeldung: 20.11.2019
(62) Teilanmeldung aus: 15808196.8
(73) Patentinhaber: Werth Messtechnik GmbH, 35394 Giessen (DE)
(72) Erfinder: CHRISTOPH, Ralf, 35394 Gießen (DE); SCHMIDT, Ingomar, 99085 Erfurt (DE); WEGNER, Volker, 35460 Staufenberg (DE); ANDRÄS, Matthias, 61197 Florstadt (DE); NEUSCHAEFER-RUBE, Ulrich, 38116 Braunschweig (DE); ETTEMEYER, Andreas, 9472 Grabs (CH); DEMIREL, Mehmet, 6842 Koblach (AT); LINZ-DITTRICH, Sabine, 9487 Gamprin-Bendern (LI); HOPP, Benjamin, 35390 Giessen (DE)
(74) Vertreter: Stoffregen, Hans-Herbert

(56) Entgegenhaltungen:
- EP-A2- 1 528 354
- DE-A1-102009 025 815
- DE-A1-102010 060 833
- US-A1- 2014 043 468

## Beschreibung

Die Erfindung bezieht sich auf ein Koordinatenmessgerät zur geometrischen Bestimmung von Merkmalen, insbesondere Oberflächenmesspunkten, an einem Werkstück, umfassend einen Bildverarbeitungssensor als ersten Sensor mit einem Bildverarbeitungsstrahlengang (erster Strahlengang), wobei der erste Strahlengang zumindest eine Frontoptik umfasst, welche dem zu messenden Werkstück zugewandt ist und als Asphäre ausgebildet ist und/oder einen chromatischen Längsfehler aufweist, und wobei auf der vom Werkstück abgewandten Seite der Frontoptik mindestens ein optischer Teiler, wie Teilerschicht, insbesondere wellenlängenselektiver Teiler, angeordnet ist, durch den ein zweiter Strahlengang mit dem Bildverarbeitungsstrahlengang gekoppelt und ein gemeinsamer Strahlengang gebildet wird, indem die Frontoptik aus Richtung des zu messenden Werkstücks durchlaufendes Licht zumindest teilweise aus dem gemeinsamen Strahlengang in den zweiten Strahlengang ausgekoppelt wird, wobei der zweite Strahlengang einem zweiten optischen Sensor als zweiten Sensor, insbesondere Abstandsensor, bevorzugt chromatischen Abstandsensor oder Abstandsensor nach dem Foucault-Prinzip, zugeordnet ist, wobei der Bildverarbeitungssensor und der zweite Sensor zur direkten Messung der Werkstückoberfläche und/oder zur Bestimmung der Auslenkung einer oder jeweils einer einem biegeelastischen Taststift zugeordneten Marke ausgebildet sind.

Auch ist ein Gegenstand der Erfindung ein Verfahren zur geometrischen Bestimmung von Merkmalen, insbesondere Oberflächenmesspunkten, an einem Werkstück.

Für die dimensionelle Messung komplexer Geometrien werden verschieden taktile, taktiloptische, optische oder computertomografische Sensoren verwendet. Bevorzugt werden diese in Koordinatenmessgeräten (KMGs) betrieben, teilweise auch mehrere Sensoren kombiniert in einem Gerät (Multisensor-KMG).

Insbesondere für die Messung von sogenannten Mikromerkmalen, also Merkmalen wie Löcher, Vertiefungen, Spalte usw. mit Abmessungen in zumindest einer Richtung, beispielsweise Lochdurchmesser oder Spaltbreite, von deutlich unterhalb einem Millimeter, werden Sensoren mit entsprechend kleinen Antastformelementen wie Kugeln, Scheiben, Spitzen usw. benötigt. Eine besondere Herausforderung besteht dann, wenn sehr weit in das Werkstück eingetaucht werden muss, die zu messenden Abschnitte sich im jeweils untersuchten Bereich bzw. Merkmal also bis weit unterhalb der direkt zugängigen Oberfläche vorliegen.

Typische Vertreter solcher Mikromerkmale sind die Spritzlöcher an Einspritzdüsen, insbesondere Diesel-Einspritzdüsen für PKWs und LKWs oder an Benzin-Einspritzdüsen für PKWs. Die Herstellung der Spritzlöcher erfolgt zumeist mittels Electrical Discharging Machining (EDM), wie beispielsweise in der DE10360080A1 der Firma Bosch beschrieben, oder Laserbearbeitung wie Laserbohren. Anschließend erfolgt auch ein Härten, wie der EP2753821A1 der Firma Bosch zu entnehmen ist. Der Einlaufradius, also der Übergang zwischen Innenraum der Einspritzdüse (folgend auch als Kanal bezeichnet) und Spritzloch wird oft verrundet, beispielsweise mittels Schleifpaste, wodurch die Formabweichungen der Spritzlöcher verringert werden, oder hydro-erosives Verrunden, wie der WO2004004973A1 der Firma Siemens zu entnehmen ist.

Insbesondere die Spritzlöcher von Diesel-Einspritzdüsen sind nach innen hin konisch, also in ihrem Durchmesser zunehmend aufgebaut. Zur Beschreibung des Kegelwinkels wird der sogenannte Konizitätsfaktor (K-Faktor) verwendet, der meist in der Maßeinheit Anstieg des Durchmessers in 10 µm Schritten je 1 mm Länge angegeben wird. K=1 bedeutet demnach, dass der Radius nach innen hin je einem Millimeter Tiefe um 10 µm ansteigt. Typische Einspritzdüsen besitzen einen K-Faktor im Bereich von 0 bis 7, zum Beispiel K=5.

Abweichende Definitionen, die sich beispielsweise auf den Einlass- und den Auslass-Durchmesser des Spritzlochs beziehen, finden sich ebenso in der Literatur. Für Benzin-Einspritzdüsen kann ebenfalls ein K-Faktor angegeben werden, meist jedoch wird der Kegelwinkel bzw. halbe Kegelwinkel angegeben, da die Länge meist weniger als 1 mm beträgt und der K-Faktor unpraktisch ist. Benzin-Einspritzdüsen besitzen zumeist einen nach außen zunehmenden Durchmesser mit Kegelwinkeln von 3° bis 10°, typisch 5° und meist im Außenbereich eine Senkung zur Sprühstrahlaufweitung. Aufgrund der kurzen Länge der Spritzlöcher, also kurzen Kegelachse ist besonders hohe Messgenauigkeit bei der Bestimmung des Kegelwinkels von Nöten.

An den Einspritzlöchern müssen Messpunkte an vertikalen Zylinderflächen oder nahezu vertikalen oder sogar überhängenden, also konischen Flächen aufgenommen werden und daraus Durchmesser, Formabweichung bzw. Rauheit bestimmt werden. Aufgrund des geringen Durchmessers der Spritzlöcher im Bereich von ca. 90 µm (Diesel-Einspritzdüsen für PKWs) bzw. ca. 250 µm (Diesel-Einspritzdüsen für LKWs) bzw. ca. 100 µm bis 200 µm (Benzin-Einspritzdüsen für PKWs) und den geringen Toleranzen im Bereich von ca. 5 µm bis 20 µm für den Durchmesser in verschiedenen Tiefen, wobei die maximalen Tiefen sich erstrecken bis ca. 0,7 mm oder auch bis 1,2 mm (Diesel-Einspritzdüsen für PKWs) bzw. bis ca. 1,4 mm oder auch bis 1,5 mm (Diesel-Einspritzdüsen für LKWs) bzw. bis ca. 0,2 mm oder auch bis ca. 0,4 mm (Benzin-Einspritzdüsen für PKWs), ist dies mit der erforderlichen Genauigkeit momentan nur durch mechanisches Antasten möglich, wobei nur besonders kleine Auslenkungen zur Vermeidung von Schaftantastungen zulässig sind. Dafür geeignete Sensoren weisen daher ein an einem Tasterschaft befindliches Antastformelement (zusammen auch Tasterverlängerung genannt) auf, das zum Aufnehmen von Messpunkten mit dem zu messenden Abschnitt des Werkstücks in Kontakt gebracht und ausgelenkt wird. Die Bestimmung der Auslenkung erfolgt entweder rein taktil, also durch Übertragung der Auslenkung über einen biegesteifen Tasterschaft zu einer oberhalb des Tasterschaftes liegenden Sensoreinheit (Auswertebaugruppe) oder optisch, insbesondere mittels eines Bildverarbeitungssensors, der das Antastformelement oder eine diesem zugeordnete am Tasterschaft befindlichen Zielmarke erfasst. Erstgenannte taktile Sensoren sind dem Fachmann hinlänglich bekannt. Die zweitgenannten taktil-optischen Sensoren sind unter anderem in folgenden Schriften der Anmelderin beschrieben.

Die EP0988505 beschreibt ein Verfahren und eine Vorrichtung, bei der von einer Tasterverlängerung über einen biegeelastischen Schaft ein Tastelement (erste Zielmarke) und gegebenenfalls eine weitere Zielmarke ausgehen, deren Koordinaten bei Auslenkung mittels eines optischen Sensors bestimmt werden.

Der EP 1 071 921 ist ein ähnlicher Sensor zu entnehmen, bei dem die Antastkraft über die Steifigkeit des biegeelastischen Schafts angepasst wird, indem ausschließlich die Biegelänge 1 variiert wird.

In der EP 1 082 581 wird für einen entsprechenden Sensor eine optomechanische Schnittstelle mit einer Justiervorrichtung beschrieben.

Die DE 198 24 107 beschreibt die Verwendung eines entsprechenden Sensors für ein Tastschnittverfahren.

In der DE 10 2004 022 314 wird ein entsprechender Sensor an einem Dreh- oder Schwenk-Gelenk betrieben.

Die PCT/EP01/10826 beschreibt unter anderem die Beschichtung des Tastelementes bzw. der Tasterverlängerung auf der dem Sensor abgewandten Seite, um eine leuchtende Marke im Inneren des Tastelementes durch Bündelung der an der Beschichtung reflektierten Strahlung, die in das Innere des Schaftes des Tastelementes bzw. der Tasterverlängerung eingebracht wird, zu erzeugen, deren Lage gemessen wird, und eine dem Antastelement zugeordnete Marke, die durch einen abgedunkelten Bereich des leuchtenden Schaftes des Tastelementes gebildet wird.

Die DE 10 2010 060 833 beschreibt einen taktil-optischen Sensor, bei dem neben der Bestimmung der Position eines Antastformelementes oder zumindest einer diesem zugeordneten Zielmarke in X- und/oder Y-Richtung des Koordinatenmessgeräts mit einem ersten Sensor wie Bildverarbeitungssensor auch eine Bestimmung in der Z-Richtung mit einem zweiten Sensor wie Abstandsensor erfolgt, wobei zur Befestigung des Antastformelementes und der Zielmarken in einer Halterung zumindest ein flexibles Verbindungselement verwendet wird, das vom Strahlengang des ersten Sensors in Strahlrichtung durchdrungen wird, wobei das zumindest eine flexible Verbindungselement transparent ist und/oder in Bezug auf den ersten Sensor stark defokussiert angeordnet wird. Als in Z-Richtung (vertikal verlaufende Richtung) die Auslenkung des Antastformelementes oder zumindest einer diesem zugeordneten Zielmarke erfassender Abstandsensor wird auch beispielsweise ein Interferometer, insbesondere ein absolut messendes Heterodyninterferometer vorgeschlagen.

Der US 2014/0043468 A1 ist ein gattungsgemäßes Koordinatenmessgerät zu entnehmen, bei dem eine zum Einsatz gelangende Frontoptik einen achromatischen Längsfehler aufweisen kann.

Der DE 10 2009 025 815 A1 ist ein Handgerät zum dreidimensionalen Messen eines Objektes, insbesondere eines Zahnes zu entnehmen. Zum Ausrichten des Handgerätes auf einen zu messenden Zahn wird ein Kamerachip benutzt, der mit Licht beaufschlagt wird, dessen Wellenlängenbereich außerhalb dessen des Messlichts liegt.

Auf den Offenbarungsgehalt aller zuvor genannten Schriften der Anmelderin wird vollständig Bezug genommen.

Aufgabe der vorliegenden Erfindung besteht darin, Mittel zur Verfügung zu stellen, die eine fehlerarme Messung mit einem Bildverarbeitungssensor trotz Verwendung einer gemeinsamen Frontoptik mit chromatischem Längsfehler eines chromatischen Sensors ermöglichen. Insbesondere soll dabei eine Kopplung zwischen dem chromatischen Sensor und einem Bildverarbeitungssensor mit wahlweise einstellbarem Arbeitsabstand und Abbildungsmaßstab realisiert werden.

Die Lösung erfolgt durch die Maßnahmen der nebengeordneten Ansprüche. Ausgestaltungen ergeben sich aus den abhängigen Ansprüchen.

Die Erfindung sieht vor, dass die beiden Strahlengänge des Bildverarbeitungssensors und des Abstandssensors über einen wellenlängenselektiven Teiler gekoppelt werden und als Frontoptik eine Asphäre eingesetzt wird.

Damit bei der Kopplung der beiden zuvor genannten Strahlengänge in Bezug auf die zur Verfügung stehende Lichtleistung möglichst verlustfrei gearbeitet werden kann, sieht die Erfindung vor, dass der oder die wellenlängenselektiven Teiler das Spektrum des Lichts aufteilen, sodass beispielsweise der Bildverarbeitungssensor nur einen schmalen Teil des Spektrums empfängt und der chromatische Sensor den verbleibenden Teil des Spektrums empfängt, also insbesondere das komplette aus Richtung des Messobjekts kommende Licht verarbeitet wird.

Zur Lösung sieht die Erfindung entsprechende wellenlängenselektive Teiler wie Dichroide oder Interferenzfilter vor, bei denen Spektralbereiche aufgeteilt werden, insbesondere durch Kaskadierung zweier Dichroide eine Kombination aus Bandpass und Bandsperre erzeugt wird, indem die beiden Dichroide unterschiedliche Trennungswellenlängen bzw. Grenzwellenlängen aufweisen.

Eine weitere Aufgabe der vorliegenden Erfindung besteht darin, unterschiedliche Arbeitsabstände für den Bildverarbeitungssensor und den zweiten Sensor einzustellen, wobei ein möglichst einfacher Aufbau für die Antriebe zur Bewegung der Linsen bzw. Linsengruppen erreicht werden soll.

Zur Lösung sieht die Erfindung hierzu insbesondere vor, dass eine oder mehrere Linsengruppen in den beiden Strahlengängen zumindest teilweise gemeinsam bewegt werden.

Eine weitere Aufgabe der vorliegenden Erfindung besteht darin, in Bezug auf die Frontoptik unterschiedliche Arbeitsabstände für den Bildverarbeitungssensor und den Abstandssensor einzustellen. Dies ist beispielsweise notwendig, wenn die Auslenkung eines vor der Frontoptik angebrachten Antastformelementes optisch bestimmt werden soll, wobei Abstandssensor und Bildverarbeitungssensor das Antastformelement bzw. dem Antastformelement zugeordnete Marke oder Marken, die in unterschiedlichen Arbeitsabständen angeordnet sind, erfassen. Insbesondere sind entsprechende Sensoren, wie beispielsweise in der WO2011064339 beschrieben, derart ausgebildet, dass das mit dem Bildverarbeitungssensor zu erfassende Antastformelement oder eine oberhalb des Antastformelementes am Taststift insbesondere Tasterschaft angeordnete Marke in einem größeren Abstand zur Frontoptik angeordnet ist als eine an der Oberseite des Taststiftes angeordnete Marke, die näher zur Frontoptik angeordnet ist, welche mit dem Abstandssensor erfasst werden muss. Hierbei besteht insbesondere die Herausforderung, unterschiedlich lange Taststifte einzusetzen, wobei der Arbeitsabstand des Bildverarbeitungssensors änderbar sein muss, wobei insbesondere der Arbeitsabstand des Abstandssensors konstant bleiben soll.

Zur Lösung sieht die Erfindung vor, dass die Optiken in den beiden Strahlengängen des Bildverarbeitungssensors und des Abstandssensors derart einstellbar sind, dass verschiedene Arbeitsabstände realisierbar sind.

Die Erfindung sieht zur Lösung der Aufgabe vor ein Koordinatenmessgerät zur geometrischen Bestimmung von Merkmalen, insbesondere Oberflächenmesspunkten, an einem Werkstück, umfassend einen Bildverarbeitungssensor als ersten Sensor mit einem Bildverarbeitungsstrahlengang (erster Strahlengang), wobei der erste Strahlengang zumindest eine Frontoptik umfasst, welche dem zu messenden Werkstück zugewandt ist und als Asphäre ausgebildet ist und/oder einen chromatischen Längsfehler aufweist, und wobei auf der vom Werkstück abgewandten Seite der Frontoptik mindestens ein optischer Teiler, wie Teilerschicht, insbesondere wellenlängenselektiver Teiler, angeordnet ist, durch den ein zweiter Strahlengang mit dem Bildverarbeitungsstrahlengang gekoppelt und ein gemeinsamer Strahlengang gebildet wird, indem die Frontoptik aus Richtung des zu messenden Werkstücks durchlaufendes Licht zumindest teilweise aus dem gemeinsamen Strahlengang in den zweiten Strahlengang ausgekoppelt wird, wobei der zweite Strahlengang einem chromatischen Abstandsensor als zweiten Sensor, zugeordnet ist, wobei der Bildverarbeitungssensor und der zweite Sensor zur direkten Messung der Werkstückoberfläche und/oder zur Bestimmung der Auslenkung einer oder jeweils einer einem biegeelastischen Taststift zugeordneten Marke ausgebildet sind, wobei der wellenlängenselektive Teiler den Teil des Spektrums des Lichts in den zweiten Strahlengang leitet, der nicht dem ersten Sensor zugeleitet wird.

Asphären sind besonders geeignet, da definierte chromatische Längsfehler genau und einfach realisiert werden können.

Insbesondere zeichnet sich die Erfindung dadurch aus, dass der Bildverarbeitungssensor einen Bildsensor wie CCD oder CMOS-Kamera aufweist und im ersten Strahlengang zwischen dem Bildsensor und dem Teiler und/oder zwischen der Frontoptik und dem Teiler mindestens zwei separat verschiebbare Linsen oder Linsengruppen zur unabhängigen Einstellung von Arbeitsabstand und Abbildungsmaßstab angeordnet sind. Bevorzugterweise ist vorgesehen, dass die Asphäre eine ausgeprägte chromatische Aberration (chromatischer Längsfehler) aufweist und im zweiten Strahlengang ein wellenlängenempfindlicher Detektor wie Spektrometer angeordnet ist, und wobei zumindest ein Teiler derart wellenlängenselektiv ausgeführt ist, dass aus dem Spektrum des aus Richtung des Werkstücks auf den Teiler treffenden Lichtes lediglich ein begrenzter Wellenlängenbereich in Richtung des Bildsensors des Bildverarbeitungsstrahlengangs geleitet wird,
- indem ein Teiler so ausgeführt ist, dass dieser den begrenzten Wellenlängenbereich oberhalb einer oberen Grenzwellenlänge reflektiert oder durchlässt, wobei die obere Grenzwellenlänge bevorzugt größer als etwa 600 Nanometer ist, wodurch im Wesentlichen rotes Licht in Richtung des Bildsensors gelangt, wobei der Teiler bevorzugt ein Dichroid ist, oder
- indem ein Teiler so ausgeführt ist, dass dieser einen begrenzten Wellenlängenbereich unterhalb einer unteren Grenzwellenlänge reflektiert oder durchlässt, wobei die untere Grenzwellenlänge bevorzugt kleiner als etwa 500 Nanometer ist, wodurch im Wesentlichen blaues Licht in Richtung des Bildsensors gelangt, wobei der Teiler bevorzugt ein Dichroid ist, oder
- indem ein Teiler als Bandpass oder Bandsperre ausgeführt ist, so dass dieser den begrenzten Wellenlängenbereich oberhalb einer unteren Grenzwellenlänge und unterhalb einer oberen Grenzwellenlänge reflektiert oder durchlässt, wobei der Wellenlängenbereich vorzugsweise nahezu einfarbig ist, bevorzugt eine spektrale Breite von maximal 100 Nanometer, besonders bevorzugt maximal 50 Nanometer aufweist, wobei der Teiler bevorzugt zumindest einen Interferenzfilter umfasst.

Hierdurch wird realisiert, dass der Bildsensor des Bildverarbeitungssensors nur einen schmalen spektralen Bereich empfängt, wodurch chromatische Fehler, die durch die Frontoptik eingeführt werden, minimiert werden.

Nach der Erfindung ist vorgesehen, dass der wellenlängenselektive Teiler den Teil des Spektrums des Lichtes, der nicht in Richtung des Bildsensors geleitet wird, in den zweiten Strahlengang leitet.

Hierdurch wird realisiert, dass ein möglichst großer Anteil des Lichts zur Auswertung zur Verfügung steht, wobei insbesondere der im zweiten Strahlengang vorhandene wellenlängenempfindliche Detektor das zur Auswertung des Abstandes mittels des chromatischen Abstandssensors benötigte breite Lichtspektrum empfängt.

Bevorzugterweise sieht die Erfindung vor, dass zwischen dem zumindest einen wellenlängenselektiven Teiler und der Frontoptik ein neutraler Teiler zur Kopplung des zweiten Strahlengangs angeordnet ist, wobei der zweite Strahlengang vorzugsweise breitbandige Lichtquelle umfasst, deren Licht in Richtung des Werkstücks einkoppelt wird, und besonders bevorzugt der wellenlängenselektive Teiler ein Dichroid oder Farbfilter ist.

Durch Verwendung des neutralen Teilers steht für den chromatischen Abstandssensor das komplette Wellenlängenspektrum zur Verfügung. Zur Minimierung der chromatischen Fehler im Bildverarbeitungsstrahlengang ist daher lediglich ein Dichroid oder Farbfilter notwendig.

Hervorzuheben ist des Weiteren, dass zur Beleuchtung des zumindest von der Frontoptik erfassten Bereichs des Werkstücks oder Taststifts zumindest eine breitbandige Lichtquelle und Mittel zum Einkoppeln in den ersten und/oder zweiten Strahlengang vorhanden sind, und vorzugsweise zumindest eine weitere Lichtquelle und Mittel zum Einkoppeln in den ersten und/oder zweiten Strahlengang vorhanden sind, wobei der spektrale Anteil der weiteren Lichtquelle sich weitestgehend mit dem begrenzten Wellenlängenbereich überdeckt, der vom wellenlängenselektiven Teiler in Richtung des Bildsensors geleitet wird.

Die Erfindung zeichnet sich auch dadurch aus, dass die Asphäre eine ausgeprägte chromatische Aberration (chromatischer Längsfehler) aufweist und im zweiten Strahlengang ein wellenlängenempfindlicher Detektor wie Spektrometer angeordnet ist, und wobei im gemeinsamen Strahlengang nacheinander zwei wellenlängenselektive Teiler, bevorzugt Dichroide angeordnet sind, die das Spektrum des aus Richtung des Werkstücks auf die Teiler treffenden Lichtes jeweils an einer Grenzwellenlänge trennen, also oberhalb dieser reflektieren und unterhalb dieser durchlassen oder umgekehrt, wobei die beiden Teiler unterschiedliche Grenzwellenlängen besitzen, bevorzugt Differenz der Grenzwellenlängen kleiner 100 Nanometer, besonders bevorzugt kleiner 50 Nanometer ist, und dass der spektrale Bereich zwischen den Grenzwellenlängen in Richtung des Bildsensors und der verbleibende spektrale Bereich in Richtung des wellenlängenempfindlichen Detektors geleitet wird.

Entsprechend dieses Vorschlags entsteht kein Verlust an Lichtleistung und die Vorrichtung kommt mit Standardbauteilen wie Dichroiden aus und ist damit besonders kostengünstig. Über die Wahl der beiden Grenzwellenlängen ist der auf den Bildsensor gelenkte Anteil einstellbar, sodass Fehler durch die chromatischen Aberrationen im Bildverarbeitungsstrahlengang bewusst einstellbar bzw. minimierbar sind.

Insbesondere zeichnet sich die Erfindung dadurch aus, dass das Licht der beiden nicht in Richtung des Bildsensors geleiteten spektralen Bereiche
- in unterschiedliche Lichtleitfasern eingekoppelt wird, wobei jede Lichtleitfaser zu einem separaten wellenlängenempfindlichen Detektor führt oder Lichtleitfasern gekoppelt und auf einen wellenlängenempfindlichen Detektor geführt werden, oder
- durch Einstellung der Neigung der Dichroide, wobei das jeweilige Licht am Dichroid reflektiertes Licht ist, und/oder durch Umlenkspiegel und/oder Optik auf weitestgehend selben Bereich eines wellenlängenempfindlichen Detektors gelenkt oder in eine zu einem wellenlängenempfindlichen Detektor führende Lichtleitfaser eingekoppelt wird.

Nach einem besonders hervorzuhebenden Vorschlag ist vorgesehen, dass erster und zweiter Strahlengang und damit erster und zweiter Sensor zueinander verschiedene Arbeitsabstände in Bezug auf die Frontoptik aufweisen, wobei Arbeitsabstand des Bildverarbeitungssensors unabhängig von Arbeitsabstand des zweiten Sensors einstellbar ist.

Hierdurch ist es unter anderem möglich, den Arbeitsabstand des Bildverarbeitungssensors unabhängig vom Arbeitsabstand des Abstandssensors für unterschiedlich lange Taststifte einer biegeelastischen Tasterverlängerung bzw. eines biegeelastischen Taststiftes einzustellen.

Besonders hervorzuheben ist, dass zweiter Strahlengang zumindest eine Linse oder Linsengruppe enthält, durch die ein im Vergleich zum Strahlengang des Bildverarbeitungssensors abweichender, insbesondere kürzerer Arbeitsabstand realisiert wird.

Des Weiteren zeichnet sich die Erfindung dadurch aus, dass zweiter Strahlengang zumindest zwei separat verschiebbare Linsen oder Linsengruppen zur unabhängigen Einstellung von Arbeitsabstand und Abbildungsmaßstab umfasst, wobei Linsen oder Linsengruppen des zweiten Strahlengangs unabhängig von Linsen oder Linsengruppen des ersten Strahlengangs bewegbar sind oder zumindest eine Linse oder Linsengruppe des ersten Strahlengangs mit zumindest einer Linse oder Linsengruppe des zweiten Strahlengangs gemeinsam bewegbar ist, besonders bevorzugt jeweils eine Linse oder Linsengruppe des ersten mit einer Linse oder Linsengruppe des zweiten Strahlengangs gemeinsam bewegbar ist.

Bevorzugterweise ist vorgesehen, dass vor der Frontoptik ein biegeelastischer Taststift mit zumindest einem Antastformelement zur Berührung des Werkstücks angeordnet ist oder anordenbar ist, wobei der Taststift zumindest eine dem Taststift bzw. Antastformelement zugeordnete vorzugsweise am oberen Ende des Taststifts angebrachte, erste Marke aufweist, die durch den zweiten Strahlengang des optischen Abstandssensors erfasst wird, und wobei der Taststift vorzugsweise eine dem Taststift bzw. Antastformelement zugeordnete am Taststift oberhalb des Antastformelements angeordnete zweite Marke aufweist, wobei das Antastformelement oder die zweite Marke durch den Strahlengang des Bildverarbeitungssensors erfasst wird und wobei erster und zweiter Sensor zueinander verschiedene Arbeitsabstände in Bezug auf die Frontoptik aufweisen.

Zur Lösung sieht die Erfindung auch ein Verfahren zur geometrischen Bestimmung von Merkmalen, insbesondere Oberflächenmesspunkten an einem Werkstück unter Verwendung des zuvor genannten Koordinatenmessgeräts vor, dass sich dadurch auszeichnet, dass wahlweise mit dem Bildverarbeitungssensor oder dem chromatischen Sensor Messpunkte direkt auf der Oberfläche des Werkstücks aufgenommen werden, wobei mittels zumindest einem wellenlängenselektiven Teiler Bildsensor des Bildverarbeitungssensor lediglich schmalbandiger Spektralbereich, und zwar maximal 100 Nanometer breiter, besonders bevorzugt maximal 50 Nanometer breiter Bereich, beispielsweise blauer Bereich zwischen etwa 450 und 500 Nanometern, des vom Werkstück reflektierten Lichtes zur Auswertung zugeführt wird, und mittels wellenlängenselektivem oder neutralem Teiler dem chromatischen Sensor breitbandiger Spektralbereich oder mehrere Spektralbereiche des vom Werkstück reflektierten Lichtes zur Auswertung zugeführt werden.

Die Verwendung des blauen Bereichs für den Bildverarbeitungssensor hat den Vorteil, dass aufgrund der geringeren Wellenlänge im Vergleich zum beispielsweise roten Bereich eine höhere Strukturauflösung erzielt werden kann. Die Erfindung ist jedoch nicht auf den blauen Bereich begrenzt. Sämtliche andere Bereiche des sichtbaren bzw. für den Bildsensor empfangbaren Spektrums sind vorgesehen.

Zur Lösung sieht die Erfindung zudem ein Verfahren zur geometrischen Bestimmung von Merkmalen, insbesondere Oberflächenmesspunkten an einem Werkstück unter Verwendung des zuvor genannten Koordinatenmessgeräts vor, das sich dadurch auszeichnet, dass Messpunkte bei Berührung des Antastformelementes mit dem Werkstück aufgenommen werden, wobei unterschiedlich lange Taststifte einsetzbar sind, und der Arbeitsabstand des Bildverarbeitungssensors auf die Länge des jeweils verwendeten Taststifts angepasst wird durch separates Verstellen von zumindest zwei im ersten Strahlengang vorhandener Linsen oder Linsengruppen, wobei vorzugsweise
- Linsen oder Linsengruppen des ersten Strahlengangs unabhängig von Linsen oder Linsengruppen des zweiten Strahlengangs bewegt werden oder
- zumindest eine Linse oder Linsengruppe des ersten Strahlengangs mit zumindest einer Linse oder Linsengruppe des zweiten Strahlengangs gemeinsam bewegt werden oder
- jeweils eine Linse oder Linsengruppe des ersten mit einer Linse oder Linsengruppe des zweiten Strahlengangs gemeinsam bewegt wird.

Die Lage von Messpunkten an einer Werkstückoberfläche (Oberflächenpunkte) kann mit einem hochgenauen optischen Abstandsensor wie Interferometer bestimmt werden.

Die den Ansprüchen zu entnehmenden Merkmale können gegebenenfalls beliebig kombiniert werden, und zwar unabhängig von den in den Ansprüchen berücksichtigten Rückbeziehungen.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung der Figuren.

Es zeigen:
- Fig. 1: eine Prinzipdarstellung eines Werkstücks, das mit dem erfindungsgemäßen Verfahren gemessen wird, befestigt in einer Drehvorrichtung
- Fig. 2: eine Prinzipdarstellung des Werkstücks und der zur mechanischen Ausrichtung eingesetzten Dreh-Schwenk-Einrichtung, integriert in ein Koordinatenmessgerät,
- Fig. 3: eine Prinzipdarstellung von zu messenden Abschnitten eines Bereiches eines ersten Werkstücks und Tasterschaft des zur Messung verwendeten ersten Sensors in geeigneter mechanischer Ausrichtung,
- Fig. 4: eine Prinzipdarstellung von zu messenden Abschnitten eines Bereiches eines zweiten Werkstücks und Tasterschaft des zur Messung verwendeten ersten Sensors in geeigneter mechanischer Ausrichtung,
- Fig. 5: eine Prinzipdarstellung einer erfindungsgemäßen Vorrichtung zur Kopplung zweier Strahlengänge mit einem Teiler,
- Fig. 6: eine erste Detaildarstellung eines Teilers,
- Fig. 7: eine zweite Detaildarstellung eines Teilers,
- Fig. 8: eine weitere Prinzipdarstellung einer erfindungsgemäßen Vorrichtung mit einem biegeelastischen Taststift und
- Fig. 9: eine weitere Prinzipdarstellung einer erfindungsgemäßen Vorrichtung mit einem ersten optisch, interferometrischen Abstandsensor und einem zweiten optischen Abstandsensor zur Erfassung von Marken an einer Tasterverlängerung.

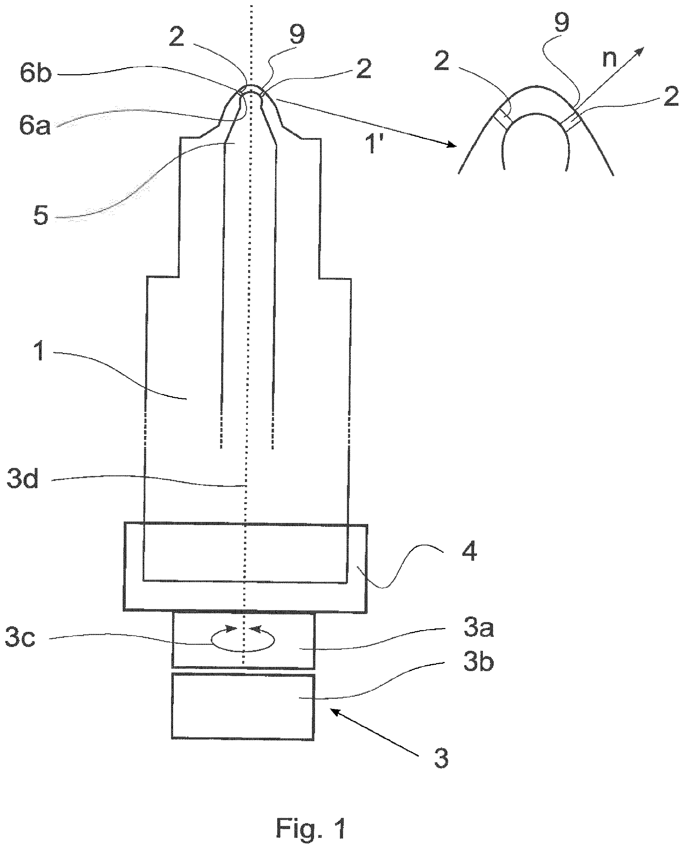

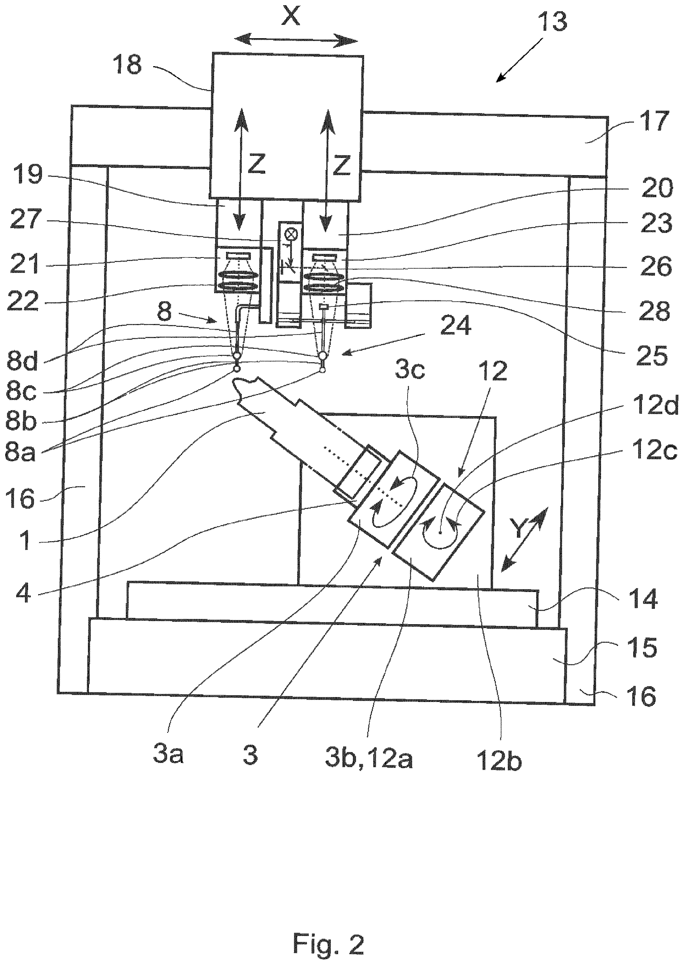

Die Figur 1 zeigt beispielhaft eine vereinfachte Darstellung eines typischen Werkstücks 1 in Form einer Einspritzdüse für PKWs oder LKWs mit mehreren Mikrogeometrien, die als Öffnungen ausgebildet sind wie Bereiche 2, im Beispiel mehrere am Umfang um die Zentralachse 3d verteilte Spritzlöcher 2. Die Darstellung der Einspritzdüse erfolgt nicht vollständig, sondern durch gestrichelte Linien unterbrochen. Insbesondere der unterhalb der Bereiche 2 in Richtung der mechanischen Drehachse 3 befindliche Bereich ist deutlich komplizierter aufgebaut, hier aber nur angedeutet. Die Bereiche (Spritzlöcher) 2 gehen an ihrem unteren Ende 6a von einem im Inneren der Einspritzdüse befindlichen Kanal 5 aus und erstrecken sich bis zum an oder nahe der Oberfläche 9 des Werkstücks befindlichen oberen Ende 6b. Um die mehreren Bereiche 2 einer Messung durch einen Sensor zugänglich zu machen, also mechanisch auszurichten, ist die Einspritzdüse 1 mittels einer Aufspannvorrichtung 4 am entlang des Pfeiles 3c um die Drehachse 3d in Bezug auf den feststehenden Teil 3b drehbaren Teil 3a einer mechanischen Drehachse 3 drehbar. Die Mittelachsen der Spritzlöcher 2 nehmen beispielhaft etwa den gleichen Winkel (Höhenwinkel) zur Zentralachse 3d ein. Es sind aber auch Einspritzdüsen mit Spritzlöchern mit unterschiedlichen oder sogar mehreren Höhenwinkeln verfügbar und zudem muss die mechanische Ausrichtung für jeden Bereich 2 getrennt sehr genau erfolgen, so dass zusätzlich auch ein Schwenken des Werkstücks 1 mittels einer mechanischen Schwenkachse 12, hier nicht, sondern erst in Figur 2 dargestellt, erfolgt. Mechanische Schwenkachse 12 und mechanische Drehachse 3 bilden zusammen oft eine Dreh-Schwenk-Einrichtung.

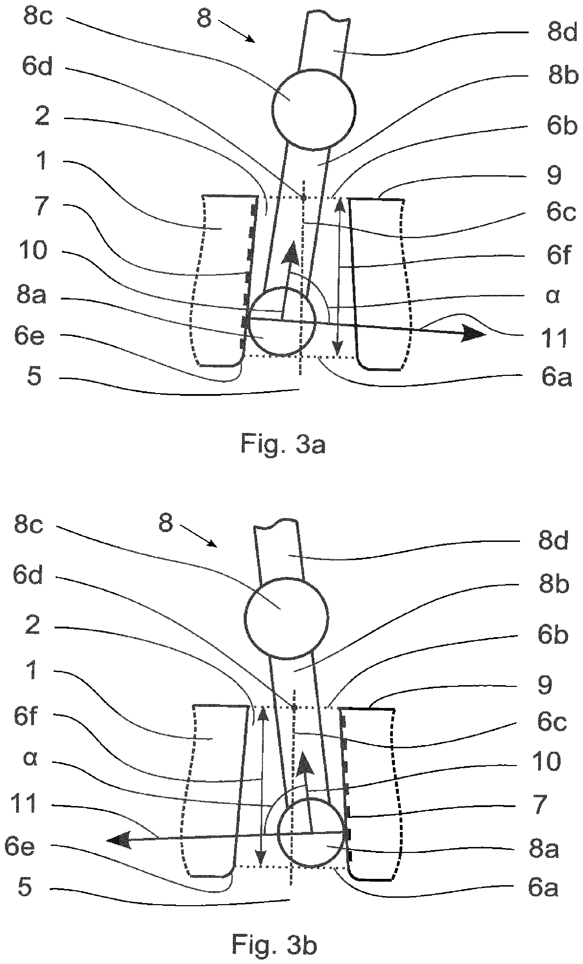

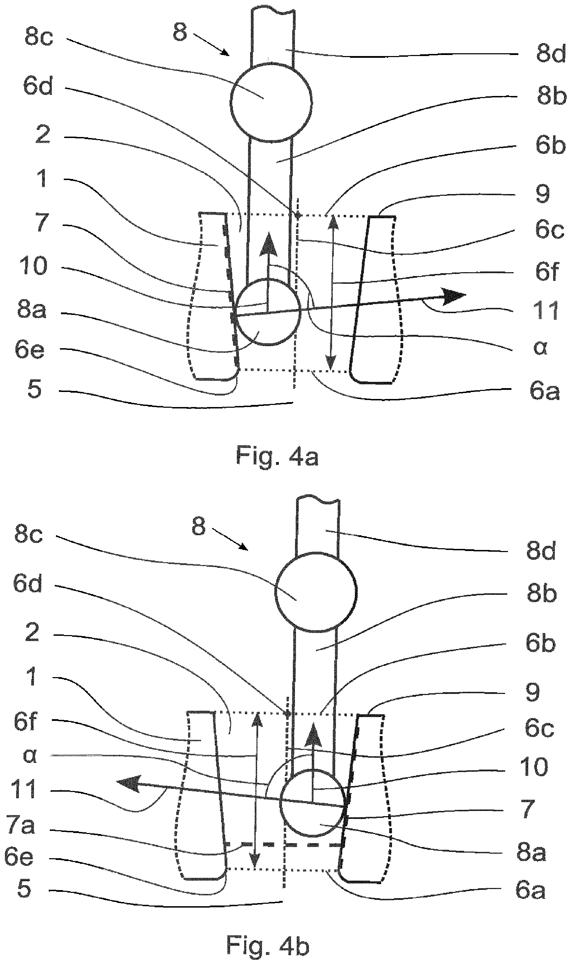

Mit dem Pfeil 1' gekennzeichnet ist zudem eine vergrößerte Darstellung des oberen Bereiches der Einspritzdüse 1. Die Oberflächennormale der Oberfläche 9 des Werkstücks ist mit dem Bezugszeichen n gekennzeichnet und bezeichnet die Senkrechte zur Oberfläche 9 in der direkten Umgebung der jeweiligen Öffnung 2. Die Oberflächennormale n unterscheidet sich von der in den Figuren 3 und 4 gezeigten Oberflächennormale 11 eines Abschnitts 7.

Figur 2 zeigt ein beispielhaftes Koordinatenmessgerät 13 mit mehreren Sensoren 8, 21, 24, 23, 27, der Dreh-Schwenkeinrichtung, bestehend aus mechanischer Drehachse 3 und mechanischer Schwenkachse 12, und das an der Dreh-Schwenk-Einrichtung mittels der Aufspannvorrichtung 4 befestigte Werkstück 1. Die Dreh-Schwenk-Einrichtung ist am Messtisch 14 befestigt, der seinerseits in Y-Richtung mittels Messachsen verschiebbar von einer Basis 15 ausgeht. Von der Basis 15 gehen zudem die beiden Stützen 16 aus, an denen die Brücke 17 befestigt ist. Der Läufer 18 ist entlang der X-Richtung zur Brücke 17 mittels Messachsen verschiebbar. Vom Läufer 18 gehen die beiden Pinolen 19 und 20 aus, die zum Läufer 18 mittels Messachsen in Z-Richtung verschiebbar sind.

An der ersten Pinole 19 befindet sich zum einen ein Bildverarbeitungssensor 21, hier als weiterer Sensor bezeichnet, und ein aus Tasterverlängerung 8 und Bildverarbeitungssensor 21 gebildeter taktil-optischer Sensor, der hier als erster Sensor bezeichnet wird. Die Tasterverlängerung umfasst einen Tasterschaft 8d, 8b, von dem das Antastformelement 8a und die Zielmarke 8c ausgehen. Der direkt oberhalb der Zielmarke 8c befindliche Bereich 8d des Tasterschaftes ist abschnittsweise biegeelastisch als zum Beispiel Glasfaser ausgeführt. Die senkrecht zur Tasterschaftachse durch Berührung der zu messenden Abschnitte des Werkstücks 1 ausgelöste Auslenkung des Antastformelementes 8a wird durch den durch seine kurze Länge weitgehend biegesteifen Bereich 8b des Tasterschaftes an die Zielmarke 8c übertragen und durch Erfassung der Zielmarke 8c mit dem Bildverarbeitungssensor 21 gemessen.

An der zweiten Pinole 20 befindet sich ebenso ein Bildverarbeitungssensor 23, eine modifizierte Tasterverlängerung 24, die am oberen, vom Antastformelement 8a abgewandten Ende eine zweite Zielmarke 25 umfasst, und ein optischer Abstandsensor 27, die zusammen auch einen weiteren taktil-optischen Sensor, und zwar einen dreidimensional die Auslenkung des Antastformelementes 8a erfassenden taktil-optischen Sensor bilden. Die Zielmarke 25 ist ein zumindest teilweise als reflektierende Fläche ausgebildeter Reflektor 25, der den Messstrahl des weiteren Abstandsensors 27 zurück in den Sensor 27 reflektiert. Dieser erfasst dadurch indirekt die Auslenkung des Antastformelementes 8a in Richtung der Schaftachse des Tasterschaftes 8d, 8b. Die Auslenkung senkrecht dazu wird wiederum durch Erfassen der Zielmarke 8c durch den Bildverarbeitungssensor 23 realisiert. Abstandsensor 27 und Bildverarbeitungssensor 23 verwenden dabei zumindest teilweise die gleiche Abbildungsoptik 28 bzw. 22, sofern, hier nicht dargestellt, auch an der ersten Pinole 19 ein Abstandsensor angebracht ist.

Der Einsatz von zwei Pinolen und den beiden Sensorgruppen 8, 21 und 23, 24, 27 ist nur beispielhaft. Sämtliche Sensoren 8, 21, 24, 23, 27 können auch an einer Pinole befestigt sein. Die Kombination der Sensoren 8, 21 und 27 ist ebenso möglich. Zudem können die Tasterverlängerungen 8 und 24 jeweils in Wechselmagazinen, hier nicht dargestellt, manuell oder bevorzugt automatisch abgelegt werden. Dann können die Sensoren 22, 23 und 27 auch unabhängig voneinander die Oberfläche des Objektes 1 erfassen. Mit dem Bildverarbeitungssensor 22, 23 ist teilweise auch eine Erfassung von in Öffnungen liegenden Strukturen möglich, wie dies zu Figur 3 noch erläutert werden wird.

Der gezeigte beispielhafte Aufbau des Koordinatenmessgerätes 13 entspricht der Bauart "feste Brücke", der aufgrund hoher erzielbarer Genauigkeiten für die Messung von Mikromerkmalen bevorzugt ist, ohne dass dies eine Einschränkung der Erfindung darstellt. Weitere Bauarten wie beispielsweise "bewegliche Brücke", "Tischgeräte", "Ausleger" oder "Ständer" sind ebenso denkbar.

Damit der jeweilige Bereich 2 von einem der Sensoren erfasst werden kann, wird neben dem translatorischen Positionieren mit den zuvor genannten Messachsen das Werkstück durch die Dreh-Schwenk-Einrichtung rotatorisch gedreht, mittels bereits erläuterter mechanischer Drehachse 3, und geschwenkt. Das Schwenken erfolgt mittels der mechanischen Schwenkachse 12, die ein Schwenken des schwenkbaren Teils 12a in Richtung des Pfeiles 12c um die Schwenkachse 12d in Bezug auf den feststehenden Teil 12b erlaubt. Translatorische und rotatorische Bewegungen werden für die Grobausrichtung und auch die mechanische (Fein-)Ausrichtung verwendet. Das Drehen ist unter anderem notwendig, um von einem Bereich 2 zum nächsten zu gelangen, durch Schwenken erfolgt das Anpassen an den Höhenwinkel.

Die Figuren 3a und 3b zeigen die Messung zweier Abschnitte 7 am Bereich 2, wobei jeweils zuvor eine getrennte mechanische Ausrichtung erfolgte. Die rotatorische mechanische Ausrichtung erfolgte dabei, bevor das Antastformelement 8a und der Tasterschaft mit seinem Bereich 8b in die Öffnung 2 eintauchte. Dies war notwendig, um die beiden Bereiche 7 sicher ohne Schaftantastung durchzuführen, weil der Durchmesser des Bereiches 2 in Richtung auf den innen liegenden Kanal 5 in seinem Durchmesser zunimmt. Am unteren Ende 6a des Bereiches 2 liegt also ein größerer Durchmesser vor als am oberen Ende 6b, wie dies beispielsweise bei Spritzlöchern von Diesel-Einspritzdüsen der Fall ist. Der Übergang des Bereiches 2 in den Kanal 5 weist eine Verrundung 6e auf. Die maximale Tiefe des Bereiches 2 ist mit 6f gekennzeichnet, die Mittelachse mit 6c und der Eintrittspunkt in die Öffnung 2, bezeichnet als Öffnungsmitte mit 6d.

Der Bereich 2 ist beispielhaft kegelförmig ausgebildet. Eine zylindrische Ausbildung ist ebenso denkbar. Der zu messende Bereich 7 ist eine Mantellinie bzw. Kegelmantellinie und erstreckt sich in Richtung der auf den Kegelmantel projizierten Mittelachse 6c. Zum kollisionsfreien Eintauchen des Antastformelementes 8a in die Öffnung 2 und Messen von Messpunkten als Einzelpunkte oder scannend entlang des Abschnitts 7 erfolgt das rotatorische mechanische Ausrichten zuvor so, dass der Tasterschaft 8b von der den Abschnitt 7 enthaltenden Wand des Bereiches 2 bei Berührung mit dem Antastformelement 8a weg verläuft, also ein Winkel a zwischen der Oberflächennormale 11 des Abschnitts 7 und der Schaftachse 10 von kleiner als 90° vorliegt. Bevorzugt beträgt α etwa 89,7° bis 89,5°, damit auch bei Auslenkung des Antastformelementes 8a keine Schaftantastung erfolgt. Zu kleine Winkel bergen die Gefahr, dass Schaftantastung bzw. Kollision mit der gegenüberliegenden Wand des Bereiches 2 erfolgt. Winkel von genau 90° sind denkbar, jedoch nur bei geringen Auslenkungen.

Es ist zu beachten, dass die Größenverhältnisse des Durchmessers von Antastformelement 8a und Durchmesser und Tiefe 6f des Bereiches 2 beispielhaft sind. Im Fall von Spritzlöchern sind die Tiefe 6f und der Durchmesser des Antastformelementes im Vergleich zum Durchmesser des Bereichs größer.

Beispielhaft beträgt die Tiefe 6f 0,7 mm bis 1,2 mm, insbesondere 1 mm, der Durchmesser in den Bereichen 6a und 6b bzw. der mittlere Durchmesser zwischen 6a und 6b 80 µm bis 90 µm, insbesondere 90 µm, und der Durchmesser des Antastformelementes 8a 20 µm bis 80 µm, insbesondere 70 µm. Der Durchmesser der bevorzugt vorhandenen Zielmarke 8c beträgt beispielhaft 80 µm bis 120 µm, insbesondere 95 µm, und der Abstand zwischen Zielmarke 8c und Antastformelement 8a 1,3 mm bis 1,5 mm, insbesondere 1,5 mm.

Vor dem eigentlichen mechanischen Ausrichten, also dem translatorischen und rotatorischen Positionieren muss die Lage des jeweiligen Bereiches, charakterisiert durch Lage der Mittelachse 6c und Position der Öffnungsmitte 6d, bestimmt werden. Hierzu sind mehrere Verfahren vorgesehen. Nach einer Grobausrichtung anhand der Solldaten wird bei einem der erfinderischen Verfahren an der Oberseite 6b der Mittelpunkt des Bereiches 2 durch Kreismessung mittels des Bildverarbeitungssensors 21 bestimmt. Alternativ erfolgt die Bestimmung mit dem taktil-optischen ersten Sensor, also indem das Antastformelement 8a nur leicht unterhalb der Oberseite 6b in die Öffnung eintaucht. Zusätzlich wird ein zweiter Mittelpunkt bestimmt, in Höhe des unteren Endes 6a oder in etwa halber Tiefe der maximalen Tiefe 6f mit dem taktil-optischen ersten Sensor. Die Verbindungslinie der beiden Mittelpunkte ergibt die Mittelachse 6c. Die Messungen mit dem Bildverarbeitungssensor 21 erfolgen bei einer nicht dargestellten Durchlichtbeleuchtung, realisiert durch eine diffus leuchtende Lichtquelle, die in den Kanal 5 eingeführt wird. Alternativ werden mit dem taktil-optischen ersten Sensor Mantellinien bis in die halbe maximale Tiefe verlaufend gescannt und ein Ausgleichzylinder oder Ausgleichkegel berechnet, dessen Achse die Mittelachse 6c bildet. Die Öffnungsmitte 6d wird durch Bestimmung von einem Messpunkt auf der Oberfläche 9 des Werkstücks nahe der Öffnung 2 mit dem Bildverarbeitungssensor im Autofokus-Modus oder dem weiteren Abstandssensor 27 bestimmt, wobei die Tasterverlängerung 8 bzw. 24 vorzugsweise abgelegt wurde oder durch Vergrößerung des Arbeitsabstandes des Bildverarbeitungssensors 21 bzw. Abstandssensors 27 unscharf wird.

Anschließend erfolgt die mechanische (Fein-)Ausrichtung unter Berücksichtigung der Oberflächennormale 11 des jeweiligen Abschnittes 7, so dass sich der Winkel α ergibt, wobei sich die Lage des Abschnittes 7 aus den Solldaten wie CAD-Daten ergibt. Die translatorische Positionierung in die Öffnung 2 hinein erfolgt erst nach der rotatorischen mechanischen Ausrichtung.

In den Figuren 4a und 4b ist, ähnlich wie in Figur 3, die Messung zweier Abschnitte 7 am Bereich 2 eines zweiten Werkstücks gezeigt, wobei nun aber keine getrennte rotatorische mechanische Ausrichtung je Abschnitt erfolgt, da der Durchmesser des Bereiches 2 nach innen hin abnimmt, alle Bereiche 7 also unter Einhaltung des gleichen Winkels α in einer Dreh-Schwenk-Stellung der Dreh-Schwenk-Einheit ohne Schaftantastung erreichbar sind. Der Tasterschaft 10 ist dabei parallel zur Mittelachse 6c ausgerichtet. Beim zweiten Werkstück handelt es sich beispielsweise um eine Benzin-Einspritzdüse und die Bereiche 2 sind deren Spritzlöcher. Durch die gleichbleibende rotatorische Ausrichtung sind nun neben den Mantellinien auch weitere Abschnitte 7a messbar. Diese können entlang des Umfangs des Kegels oder aber beliebig innerhalb des Bereiches 2 wie Kegelmantel verlaufen.

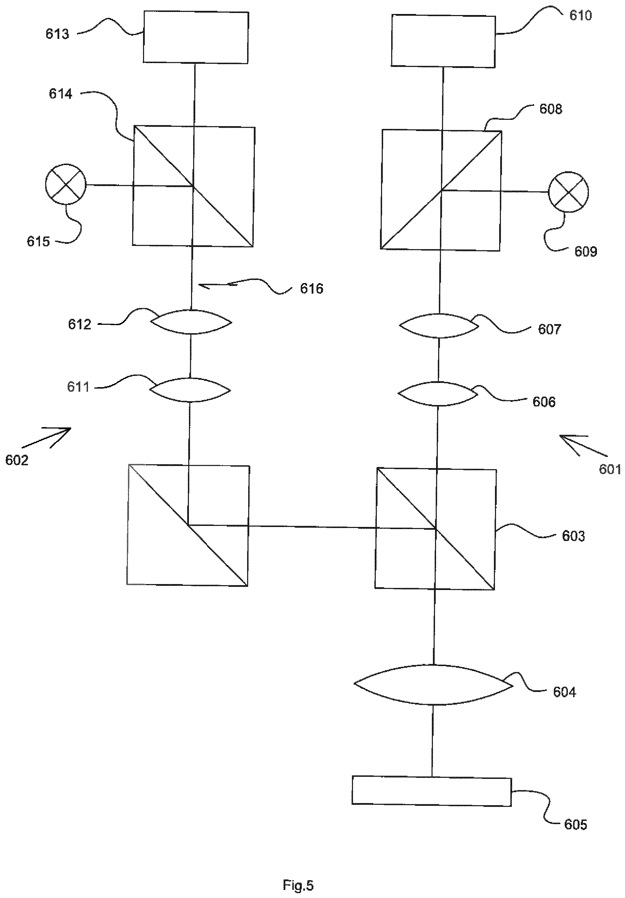

Anhand der Figur 5 wird die Kopplung des ersten Strahlengangs 601 des Bildverarbeitungssensors und des zweiten Strahlengangs 602 eines Abstandssensors mittels des Teilers 603 dargestellt. Nach dem Vereinigen durchlaufen die beiden Strahlengänge 601 und 602 einen gemeinsamen Strahlengang in Richtung des Werkstücks 605, welcher beispielhaft hier lediglich zusätzlich aus der Frontoptik 604 besteht, wobei der Teiler 603 ebenso zum gemeinsamen Strahlengang zu zählen ist. Der erste Strahlengang 601 weist zudem die beiden verschiebbaren Linsengruppen 606 und 607 auf, sowie einen weiteren Strahlteiler 608 zur Einkopplung des Lichts der Lichtquelle 609, sowie den Bildsensor 610, wie CCD- oder CMOS-Kamera 610. Der zweite Strahlengang 602 weist zumindest die verschiebbaren Linsengruppen 611 und 612 auf. Bevorzugt ist im zweiten Strahlengang 602 ebenso eine über den Strahlteiler 614 einkoppelbare Lichtquelle 615 vorhanden. Zudem zählt der Empfänger 613 zum Strahlengang 602, welcher im Fall eines chromatischen Sensors als Spektrometer und im Fall eines Foucault-Sensors als Differenzdiode ausgebildet ist. Im Fall des foucaultschen Sensors ist zudem im Strahlengang 602 die Schneide 616 vorgesehen.

Für den Fall, dass der zweite Strahlengang 602 mit dem chromatischen Sensor ausgestattet ist, kann beispielsweise der Strahlengang zwischen den Linsengruppen 612 und dem Strahlteiler 614 zumindest teilweise als optische Faser ausgeführt sein. Ebenso kann der Bereich zwischen dem Teiler 603 und der Linsengruppe 611 zumindest teilweise als optische Faser ausgeführt sein.

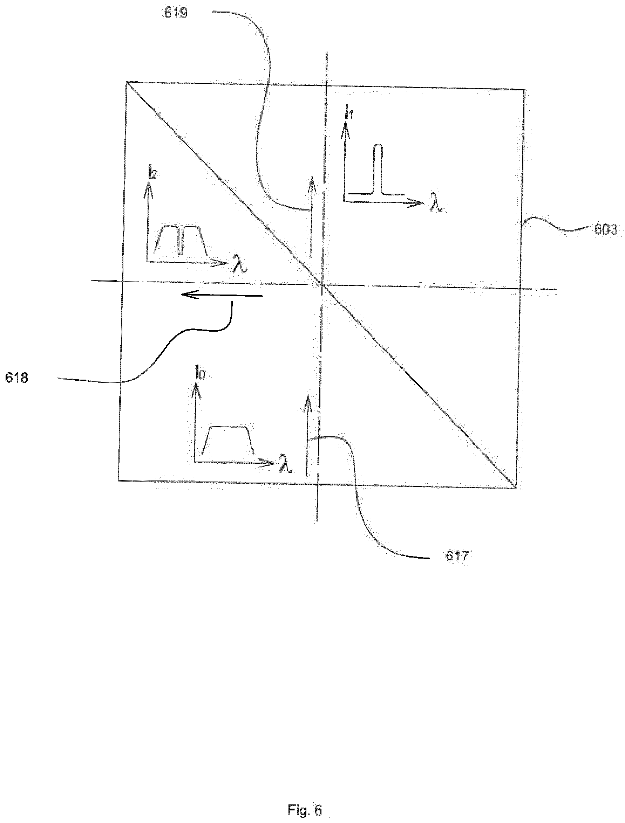

Fig. 6 zeigt eine erste Ausgestaltung der erfindungsgemäßen Vorrichtung in Bezug auf den Teiler 603. Dieser ist derart ausgebildet, dass aus Richtung des Werkstücks 605 stammendes Licht 617, welches breitbandiges Licht I₀ ist, aufgeteilt wird in einen Teilstrahl 618 mit der spektralen Verteilung I₂ in Richtung des zweiten Strahlengangs 602 und in den Teilstrahl 619 mit der Intensität I₁, welcher in den ersten Strahlengang 601 in Richtung des Bildsensors 610 gelenkt wird. Hierdurch steht dem chromatischen Abstandssensor ein großer spektraler Bereich zur Auswertung des Abstandes zur Verfügung und der Bildverarbeitungssensor erhält nur einen schmalen spektralen Bereich, der kaum chromatische Fehler aufweist. Der Teiler 603 ist dazu mit einer oder mehreren spezieller wellenlängenselektiven Schichten versehen.

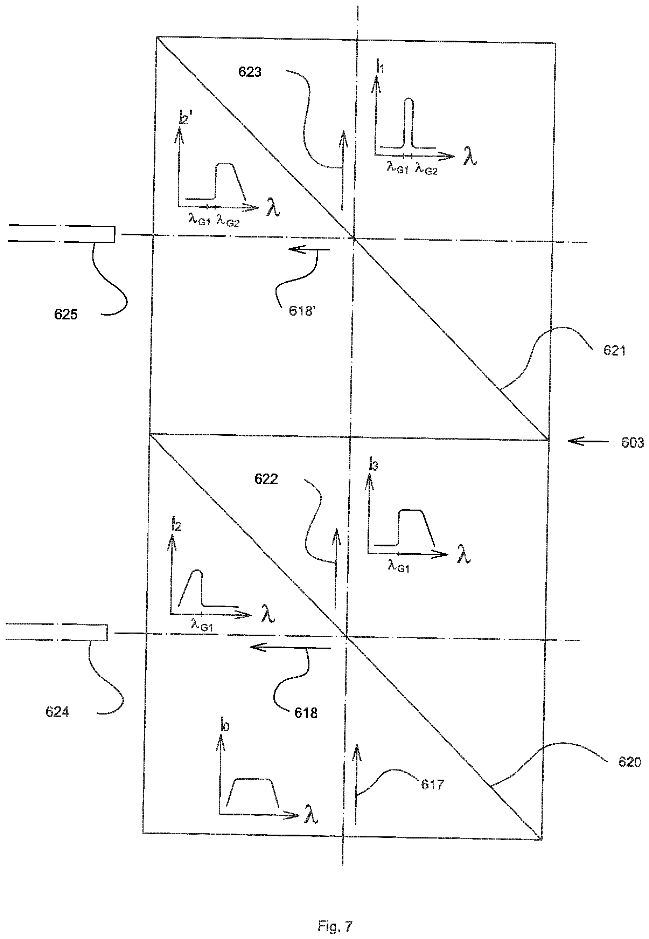

Eine alternative Ausführung des Teilers 603 ist in der Figur 7 dargestellt. Hierbei handelt es sich um einen kaskadierten Teiler mit zwei Teilerschichten, insbesondere Dichroiden 620 und 621. Der erste Dichroid 620 weist die Grenzwellenlänge λ_{G1} und der zweite Dichroid 621 weist die höhere Grenzwellenlänge λ_{G2} auf. Hierdurch reflektiert der erste Dichroid 620 den Wellenlängenbereich unterhalb λ_{G1} in Richtung 618 des zweiten Strahlengangs und lässt spektrale Anteile oberhalb X_{G1} in Richtung 622 zu dem zweiten Dichroid 621 durch. Am Dichroid 621 werden die verbleibenden spektralen Anteile I₃ des Strahls 622 erneut aufgeteilt, und zwar in den Bereich oberhalb λ_{G2} entsprechend der Intensität I₂ in Richtung des Pfeiles 618 in den zweiten Strahlengang und den Anteil I₁ zwischen den beiden Grenzwellenlängen λ_{G1} und λ_{G2} in Richtung des Pfeiles 623 in den ersten Strahlengang in Richtung des Bildsensors 610. Der spektrale Bereich 618 wird beispielsweise von einer Faser 624 aufgenommen und der spektrale Bereich 618' von einer zweiten optischen Faser 625, wobei diese in Richtung des Spektrometers 613 im zweiten Strahlengang des chromatischen Sensors geleitet und vorzugsweise mittels eines Faserkopplers vereinigt werden.

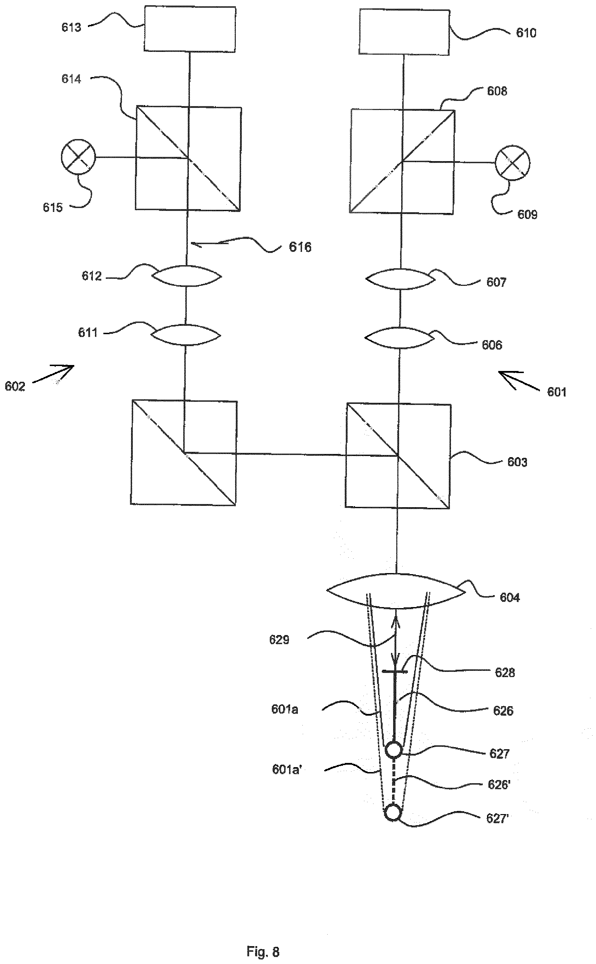

In Fig. 8 ist in Erweiterung zu der Darstellung der Figur 5 werkstückseitig vor der Frontoptik 604 ein biegeelastischer Taststift 626, beispielsweise an einer nicht dargestellten Wechselschnittstelle mit dem optischen Strahlengang 601 automatisch auswechselbar verbunden, angeordnet. Von dem Taststift 626 geht das Antastformelement 627 aus, das zur berührenden Messung mit dem Werkstück vorgesehen ist. Die Auslenkung senkrecht zur Achse des Taststiftes 626, also senkrecht zur optischen Achse des Strahlengangs 601 wird mittels des ersten Strahlengangs, also des Bildverarbeitungssensors 610 erfasst, dargestellt durch beispielhafte Strahlen 601a des ersten Strahlengangs. Anstatt der direkten Erfassung des Antastformelements 627 kann an dem Taststift in Richtung auf die Frontoptik 604 zu, also oberhalb des Antastformelementes 627 auch eine hier als zweite Marke bezeichnete, jedoch nicht dargestellte Marke, durch den Bildverarbeitungssensor erfasst werden. Des Weiteren geht von dem Taststift 626 die erste Marke 628 aus, welche beispielsweise als Beschichtung des als Faser ausgeführten Taststiftes 626 oder beispielsweise auch als aufgeklebter Spiegel bzw. Teilspiegel ausgeführt ist, wobei ein Teilspiegel ein Teil des Lichtes passieren lässt, um eine Beleuchtung des Antastformelementes 627 oder der zweiten Marke zu ermöglichen und einen Teil des Lichtes reflektiert, um dieses für eine Messung zur Verfügung zu stellen. Erfindungsgemäß ist vorgesehen, dass die zweite Marke 628 dazu dient, dass die Messstrahlung 629 des zweiten Strahlengangs, insbesondere eines Abstandssensors zumindest teilweise reflektiert wird, um die Auslenkung des Antastformelements 627 in Richtung der Taststiftachse zu messen. Der Strahlengang des zweiten Sensors 602 wird dabei durch den Teiler 603 in Richtung 629 auf die am oberen Ende des Taststifts angebrachte erste Marke 628 umgelenkt und durch die Frontoptik 604 auf die Marke 628 fokussiert. Gestrichelt dargestellt ist ein wahlweise anstatt des Taststifts 626 einbringbarer Taststift 626', welcher das Antastformelement 627' aufweist und beispielhaft die zweite Marke an derselben Stelle 628 aufweist. Damit das Antastformelement 627' bzw. eine diesem zugeordnete zweite Marke durch den Bildverarbeitungsstrahlengang 601 auf den Detektor 610 abgebildet werden kann, ist es notwendig, den Arbeitsabstand zumindest durch Bewegen der Linsengruppen 606 und 607 oder einer der beiden Linsengruppen 606 und 607 so anzupassen, dass die beispielhaft mit dem Bezugszeichen 601a' dargestellten Strahlen das Antastformelement 627' erfassen. In der dargestellten beispielhaften Darstellung muss der Arbeitsabstand des zweiten Strahlengangs, also des Abstandssensors 602 gleich bleiben, um die Marke 628 zu erfassen. Erfindungsgemäß ist jedoch auch vorgesehen, dass die Position der Marke 628 für die zweite Taststiftkonfiguration, also Marke 628' an einer in Richtung der Taststiftachse versetzten Position angeordnet ist, und somit auch der Arbeitsabstand des zweiten Sensors 602 durch Bewegen der Linsengruppen 611 und/oder 612 einstellbar sein muss. Ist dies jedoch nicht vorgesehen, so kann die Verstellbarkeit der Linsengruppen 611 und 612 ggf. entfallen bzw. sind entsprechende Linsengruppen nicht vorzusehen. Ersatzweise kann jedoch eine weitere Linse oder Linsengruppe anstelle der Linsengruppen 611 und 612 zur Einstellung eines festen Arbeitsabstandes auf die Marke 628 vorgesehen sein.

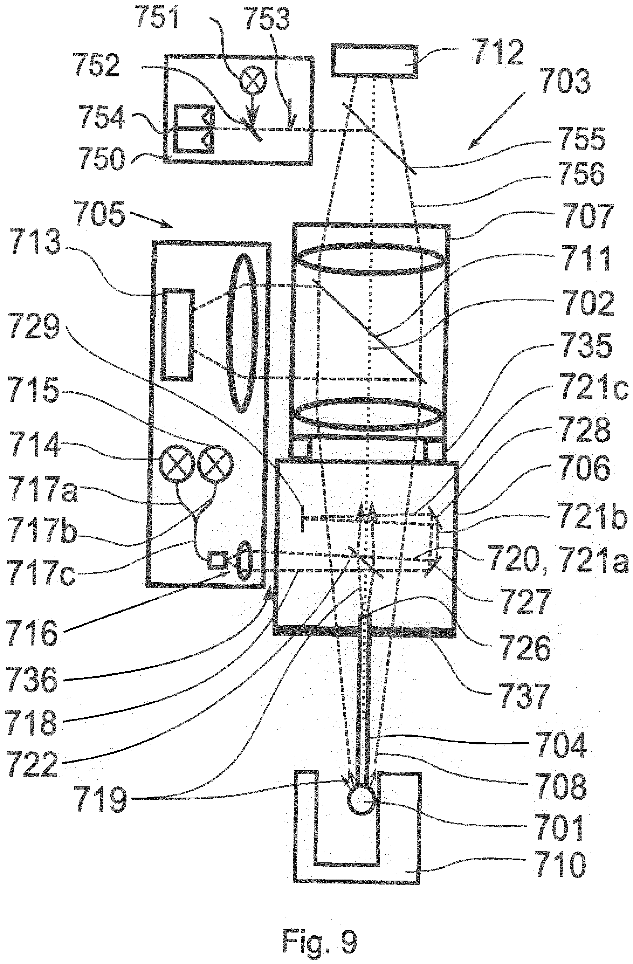

Die Figur 9 zeigt eine weitere Prinzipdarstellung einer erfindungsgemäßen Vorrichtung, insbesondere einen taktil-optischen Sensor, mit einem ersten optisch, interferometrischen Abstandssensor 705 und einem zweiten optischen Abstandssensor 750 zur Erfassung von Marken 701, 726, die von einer Tasterverlängerung 704 ausgehen.

Die Messungen an dem Werkstück 710 werden dabei durch Antastung mit einem Antastformelement 701 durchgeführt, welches bei Berührung mit dem Werkstück 710 ausgelenkt wird und von einer Tasterverlängerung, insbesondere biegeelastischen Tasterverlängerung 704 ausgeht. Die Auslenkung bzw. Position des Antastformelementes 701 oder alternativ einer darüber angeordneten, nicht dargestellten Marke, wie beispielsweise kugelförmige Verdickung der Tasterverlängerung 704 (beide als erste Marke bezeichnet) wird in den beiden lateralen Richtungen (X- und Y-Richtung, rechtwinklig zur optischen Achse 702 des Bildverarbeitungssensors 703) mit dem Bildverarbeitungssensor 703, aufweisend die Kamera 712, erfasst, wie dies hinreichend im Stand der Technik beschrieben ist. In der vertikalen Richtung (Z-Richtung) erfolgen gleichzeitig mit zwei optischen Abstandssensoren 705 und 750 Messungen, die erfindungsgemäß kombiniert werden, um dem Messergebnis des ersten Abstandssensors 705 einen Eindeutigkeitsbereich zuzuordnen.

Der erste optische Abstandssensor 705 ist als Interferometer ausgeprägt und erfasst die erste Marke 701 (Antastformelement oder darüber befindliche erste Marke), hier das Antastformelement 701. Der zweite optische Abstandssensor 750 ist als Foucault-Sensor ausgeprägt und erfasst die am oberen Ende der Tastverlängerung 704 angeordnete zweite Marke 726, die beispielsweise als Spiegel, insbesondere teildurchlässiger Spiegel, oder Dichroid ausgebildet ist, um neben der Reflexion des Messstrahls des zweiten Abstandssensors, der nach dem Einspiegeln mittels optischen Teiler wie Teilerspiegel 755 in den Strahlengang 756, 708 des Bildverarbeitungssensors 703 entlang dessen optischer Achse 702 verläuft, zumindest teildurchlässig für Licht in die vorzugsweise als Lichtleitfaser ausgebildete Tasterverlängerung 704 zur Beleuchtung (Selbstleuchten) des Antastformelementes 701 oder der ersten Marke für die Erfassung mit dem Bildverarbeitungssensor 703 zu sein. Der zweite optische Abstandssensor 750 weist eine Lichtquelle 751 zur Generierung eines Messstrahls, den optischen Teiler 752, die Schneide 753 und die Differenzdiodenanordnung 754 zur Auswertung des an der zweiten Marke 726 reflektierten und in den zweiten optischen Abstandssensor 750 mittels des optischen Teilers 755 zurück umgelenkten Messstrahls auf. Es sind aber auch andere optische Abstandssensoren als der zweite optische Abstandssensor vorgesehen.

Auch zum taktil-optischen Sensor gehört bevorzugt eine Abbildungsoptik 707, die zumeist aus mehreren Linsen besteht und auch als Zoomoptik, gegebenenfalls mit unabhängig von der Zoomstufe einstellbarem Arbeitsabstand, ausgebildet sein kann, um zumindest einen Strahlengang 756, 708 entlang der optischen Achse 702 zu bilden, der auf das Antastformelement 701 oder eine diesem zugeordnete erste Marke fokussiert ist. Die optische Achse 702, die Abbildungsoptik 707 und der Strahlengang 708, 756 sind zunächst dem lateral messenden optischen Sensor 703 zugeordnet, werden aber folgend zumindest teilweise auch für den ersten, interferometrischen Abstandssensor 705 und den zweiten optischen Abstandssensor 750 verwendet.

Wie bereits ausführlich dem Stand der Technik zu entnehmen, kann der Schattenwurf des Antastformelements 701 oder der ersten Marke bei Durchlichtbeleuchtung oder das selbst leuchtende Antastformelement 701 oder die selbst leuchtende erste Marke durch den Bildverarbeitungssensor 703 erfasst werden. Bevorzugt wird im Rahmen dieser Anmeldung die zweite Variante, auch als Eigenleuchten bezeichnet, verwendet. Dieses Eigenleuchten wird erzeugt, indem Licht an der vom Werkstück 710 abgewandten Seite 726 der Tasterverlängerung 704, also tasterverlängerungsseitig auf der in Bezug auf das Antastelement fernliegenden oder abgewandten Seite, in diese eingekoppelt und innerhalb dieser bis zum Antastformelement 701 oder, sofern vorhanden, der ersten Marke, weitergeleitet wird. Die Tastverlängerung 704 ist dazu als zumindest teilweise Licht leitend (Lichtleitfaser) ausgebildet, beispielsweise als Glas- oder Kunststofffaser. Antastformelement 701 bzw. erste Marke sind durch nach dem Stand der Technik bekannte Beschichtung so ausgebildet, dass sie das zugeführte Licht größtenteils abgeben, welches von der Abbildungsoptik 707 erfasst und in Richtung der Auswerteeinheiten wie Kamera 712 und Empfänger 713 der Sensoren 703 und 705 abgebildet wird. Die Strahlengänge beider Sensoren verlaufen dazu bis zu einem optischen Teiler 711 gemeinsam und werden von diesem einerseits in Richtung der Auswerteeinheit 712 des lateral messenden Sensors (Bildverarbeitungssensors) 703 und andererseits in Richtung der Auswerteeinheit 713 des ersten optischen, interferometrischen, Abstandssensors 705 geleitet. Der optische Teiler 711 ist beispielsweise als Teilerspiegel wie halbdurchlässige Folie (Pellicle) oder als Teilerwürfel ausgeprägt. Die Auswerteeinheiten 712, 713 sind beispielsweise Kameras mit vorzugsweise flächiger Empfängerfläche, wie CCD- oder CMOS-Kameras und haben gegebenenfalls zusätzliche Abbildungslinsen vorgeschaltet. Das zum Eigenleuchten in die Tasterverlängerung eingekoppelte Licht kann durch den Messstrahl 719 des ersten, interferometrischen Abstandsensors 705 und/oder den Messstrahl des zweiten optischen Abstandssensors 750 und/oder durch eine nicht dargestellte, separate Lichtquelle, deren Licht durch einen weiteren, ebenfalls nicht dargestellten, optischen Teiler in den Strahlengang 756 eingespiegelt wird, gebildet werden.

Zum vertikal messenden interferometrischen, ersten optischen Abstandsaensor 705 gehören neben der Abbildungsoptik 707 und der Auswerteeinheiten 713 unter anderem auch die Lichtquellen 714 und 715, die Lichtwellenleiter 717a, 717b und 717c und eine Einkoppelanordnung 716. Letztere besteht zumeist aus einem Faserende mit vorgesetzter Strahlformoptik und koppelt die Strahlung 718 der Lichtquellen 714 und 715 aus dem Lichtwellenleiter 717c so aus, dass eine Einkopplung in die Tasterverlängerung 704 ermöglicht wird. Das Licht der beiden Lichtquellen 714 und 715 wird durch einen Y-Koppler, der die Lichtwellenleiter 717a und 717b mit dem Lichtwellenleiter 717c verbindet, vereint. Die Lichtquellen 714 und 715, die Lichtwellenleiter 717a, 717b und 717c und die Einkoppelanordnung 716 können alternativ auch direkt in der Einheit 706 angeordnet werden. In einer alternativen Ausführung zur Ausführung als Heterodyninterferometer mit zwei Lichtquellen 714 und 715 unterschiedlichen Spektrums, insbesondere unterschiedlicher schmalbandiger Wellenlängen, ist auch die Ausführung als Homodyninterferometer vorgesehen, wobei nur eine Lichtquelle 714 schmalbandiges Licht abgibt, das mittels Lichtwellenleiter 717a und der Einkoppelanordnung 716 eingekoppelt wird.

Die vorzugsweise austauschbare bzw. wechselbare Einheit 706 beinhaltet unter anderem die Tasterverlängerung 704, Mittel 737 zur Befestigung der Tasterverlängerung 704, Mittel 722 zur Teilung der Strahlung 718 in die Messstrahlung 719 und die Referenzstrahlung 720, Mittel 722 zur Umlenkung der Messstrahlung 719 in Richtung der vom Werkstück 710 abgewandten Seite 726 der Tasterverlängerung 704 und Mittel 727, 728, 729 wie Reflektoren zur Bildung eines Referenzstrahlengangs 721a, 721b, 721c, wobei der Referenzstrahlengang dabei teilweise geneigt verläuft, insbesondere rechtwinklig, zur optischen Achse (Abschnitte 721a, 721c) und teilweise parallel zur optischen Achse (Abschnitt 721b) verläuft, also mehrfach gefaltet (umgelenkt) ist. Die Reflektoren 727, 728 und 729 befinden sich dabei außerhalb des Strahlengangs 708, insbesondere also seitlich neben dem optischen Strahlengang 708. Die Einheit 706 enthält zudem nicht dargestellte Mittel wie beispielsweise Permanentmagnete, um an einer Wechselschnittstelle 735 lösbar befestigt zu werden. Die Einkopplung der Strahlung 718 erfolgt bevorzugt seitlich zur Einheit 706 an einer als beispielsweise Öffnung ausgebildeten Schnittstelle 736, kann aber ebenso auch innerhalb der Wechselschnittstelle 735 erfolgen. Gegebenenfalls ist dann eine zusätzliche Umlenkung der Strahlung 718 erforderlich. Sofern die Lichtquellen 714 und 715, die Lichtwellenleiter 717a, 717b und 717c und die Einkoppelanordnung 716 direkt in der Einheit 706 angeordnet sind, werden über die Wechselschnittstelle 735 die benötigten elektrischen Zuführungen zu den Lichtquellen 714 und 715 geführt.

Die aus dem Antastformelement austretende Messstrahlung 719 wird von der Abbildungsoptik 707 erfasst und mittels des optischen Teilers 711 zur Auswerteeinheit 713 umgelenkt. Hierbei erfolgt die Überlagerung (Interferenz) mit dem nach Reflexion an den Umlenkspiegeln 727, 728, 729, erneut 728, erneut 727 und dem Teiler 722 in der gleichen Richtung verlaufendem Referenzstrahlengang 720.

Soll im Gegensatz zum in Bezug auf Figur 9 bis hierher beschriebenen taktil-optischen Messmodus, in den zuvor erwähnten ersten oder zweiten Messmodus Messpunkte (Oberflächenpunkte) auf der Oberfläche des Werkstücks 710 direkt mit den beiden optischen Abstandssensoren 705, 750 gemeinsam (erster Messmodus) oder separat (zweiter Messmodus) erfasst und gemessen werden, so wird erfindungsgemäß die Tasterverlängerung 704 entfernt, vorzugsweise automatisch in einer Parkstation abgelegt, indem die gesamte Einheit 706 entfernt und vorzugsweise automatisch in einer Parkstation abgelegt wird. Bei der hier dargestellten Strahlrichtung der Strahlung 718 muss anstelle der Einheit 706 zumindest für die Messung mit dem ersten optischen Abstandssensor 705 eine nicht dargestellte Einheit 706a angeordnet werden, die den optischen Teiler 722 und die Umlenkeinrichtungen 727, 728 und 729 enthält. Erfindungsgemäß sind für den ersten optischen Abstandssensor jedoch auch solche vorgesehen, bei denen der Referenzstrahlengang außerhalb der Einheit 706 geführt ist, wodurch lediglich der optische Teiler 722 in der Einheit 706a vorgesehen ist, oder solche, bei denen zusätzlich die Strahlrichtung der Strahlung 718 bereits außerhalb der Einheit 706 in Richtung der optischen Achse 702 verläuft, wodurch eine Einheit 706a nicht benötigt wird.

## Patentansprüche

1. Koordinatenmessgerät (13) zur geometrischen Bestimmung von Merkmalen, insbesondere Oberflächenmesspunkten, an einem Werkstück (605), umfassend einen Bildverarbeitungssensor als ersten Sensor (610) mit einem Bildverarbeitungsstrahlengang (erster Strahlengang) (601), wobei der erste Strahlengang zumindest eine Frontoptik (604) umfasst, welche dem zu messenden Werkstück zugewandt ist und als Asphäre ausgebildet ist und/oder einen chromatischen Längsfehler aufweist, und wobei auf der vom Werkstück abgewandten Seite der Frontoptik mindestens ein wellenlängenselektiver Teiler (603) angeordnet ist, durch den ein zweiter Strahlengang (602) mit dem Bildverarbeitungsstrahlengang gekoppelt und ein gemeinsamer Strahlengang gebildet wird, indem die Frontoptik aus Richtung des zu messenden Werkstücks durchlaufendes Licht zumindest teilweise aus dem gemeinsamen Strahlengang in den zweiten Strahlengang ausgekoppelt wird, wobei der zweite Strahlengang einem chromatischen Abstandssensor als zweiten Sensor (613) zugeordnet ist, wobei der Bildverarbeitungssensor und der zweite Sensor zur direkten Messung der Werkstückoberfläche (9) und/oder zur Bestimmung der Auslenkung einer oder jeweils einer einem biegeelastischen Taststift (626) zugeordneten Marke (628) ausgebildet sind,
**dadurch gekennzeichnet,**
**dass** der wellenlängenselektive Teiler (603) den Teil des Spektrums des Lichts in den zweiten Strahlengang leitet, der nicht in Richtung des ersten Sensors (610) geleitet wird.

2. Koordinatenmessgerät nach Anspruch 1,
**dadurch gekennzeichnet,**
**dass** der Bildverarbeitungssensor (610) einen Bildsensor wie CCD- oder CMOS-Kamera aufweist und im ersten Strahlengang (601) zwischen dem Bildsensor und dem Teiler und/oder zwischen der Frontoptik (604) und dem Teiler (603) mindestens zwei separat verschiebbare Linsen (606, 607) oder Linsengruppen zur unabhängigen Einstellung von Arbeitsabstand und Abbildungsmaßstab angeordnet sind.

3. Koordinatenmessgerät nach Anspruch 1 oder 2,
**dadurch gekennzeichnet,**
**dass** die Asphäre eine ausgeprägte chromatische Aberration (chromatischer Längsfehler) aufweist und im zweiten Strahlengang (602) ein wellenlängenempfindlicher Detektor wie Spektrometer angeordnet ist, und wobei der wellenlängenselektive Teiler derart ausgeführt ist, dass aus dem Spektrum des aus Richtung des Werkstücks (605) auf den Teiler (603) treffenden Lichtes lediglich ein begrenzter Wellenlängenbereich in Richtung des Bildverarbeitungssensors (610) des Bildverarbeitungsstrahlengangs (601) geleitet wird,
- indem ein Teiler so ausgeführt ist, dass dieser den begrenzten Wellenlängenbereich oberhalb einer oberen Grenzwellenlänge reflektiert oder durchlässt, wobei die obere Grenzwellenlänge bevorzugt größer als etwa 600 Nanometer ist, wodurch im Wesentlichen rotes Licht in Richtung des Bildsensors gelangt, wobei der Teiler bevorzugt ein Dichroid ist, oder
- indem ein Teiler so ausgeführt ist, dass dieser einen begrenzten Wellenlängenbereich unterhalb einer unteren Grenzwellenlänge reflektiert oder durchlässt, wobei die untere Grenzwellenlänge bevorzugt kleiner als etwa 500 Nanometer ist, wodurch im Wesentlichen blaues Licht in Richtung des Bildsensors gelangt, wobei der Teiler bevorzugt ein Dichroid ist, oder
- indem ein Teiler als Bandpass oder Bandsperre ausgeführt ist, so dass dieser den begrenzten Wellenlängenbereich oberhalb einer unteren Grenzwellenlänge und unterhalb einer oberen Grenzwellenlänge reflektiert oder durchlässt, wobei der Wellenlängenbereich vorzugsweise nahezu einfarbig ist, bevorzugt eine spektrale Breite von maximal 100 Nanometer, besonders bevorzugt maximal 50 Nanometer aufweist, wobei der Teiler bevorzugt zumindest einen Interferenzfilter umfasst.

4. Koordinatenmessgerät nach zumindest einem der vorhergehenden Ansprüche 1 bis 3,
**dadurch gekennzeichnet,**
**dass** zwischen dem zumindest einen wellenlängenselektiven Teiler (603) und der Frontoptik (604) ein neutraler Teiler zur Kopplung des zweiten Strahlengangs (602) angeordnet ist, wobei der zweite Strahlengang vorzugsweise breitbandige Lichtquelle umfasst, deren Licht in Richtung des Werkstücks (605) eingekoppelt wird, und besonders bevorzugt der wellenlängenselektive Teiler ein Dichroid oder Farbfilter ist.

5. Koordinatenmessgerät nach zumindest einem der vorhergehenden Ansprüche 1 bis 4,
**dadurch gekennzeichnet,**
**dass** zur Beleuchtung des zumindest von der Frontoptik erfassten Bereichs des Werkstücks (605) oder Taststifts (626) zumindest eine breitbandige Lichtquelle (604, 615) und Mittel zum Einkoppeln in den ersten und/oder zweiten Strahlengang (601, 602) vorhanden sind, und vorzugsweise zumindest eine weitere Lichtquelle und Mittel zum Einkoppeln in den ersten und/oder zweiten Strahlengang vorhanden sind, wobei der spektrale Anteil der weiteren Lichtquelle sich weitestgehend mit dem begrenzten Wellenlängenbereich überdeckt, der vom wellenlängenselektiven Teiler in Richtung des Bildsensors geleitet wird.

6. Koordinatenmessgerät nach zumindest einem der vorhergehenden Ansprüche 1 bis 5,
**dadurch gekennzeichnet,**
**dass** die Asphäre eine ausgeprägte chromatische Aberration (chromatischer Längsfehler) aufweist und im zweiten Strahlengang (602) ein wellenlängenempfindlicher Detektor wie Spektrometer angeordnet ist, und wobei im gemeinsamen Strahlengang nacheinander zwei wellenlängenselektive Teiler (620,621), bevorzugt Dichroide angeordnet sind, die das Spektrum des aus Richtung des Werkstücks (605) auf die Teiler treffenden Lichtes jeweils an einer Grenzwellenlänge trennen, also oberhalb dieser reflektieren und unterhalb dieser durchlassen oder umgekehrt, wobei die beiden Teiler unterschiedliche Grenzwellenlängen besitzen, bevorzugt Differenz der Grenzwellenlängen kleiner 100 Nanometer, besonders bevorzugt kleiner 50 Nanometer ist, und dass der spektrale Bereich zwischen den Grenzwellenlängen in Richtung des Bildverarbeitungssensors (610) und der verbleibende spektrale Bereich in Richtung des wellenlängenempfindlichen Detektors (613) geleitet wird.

7. Koordinatenmessgerät nach Anspruch 6,
**dadurch gekennzeichnet,**
**dass** das Licht der beiden nicht in Richtung des Bildverarbeitungssensors (610) geleiteten spektralen Bereiche
- in unterschiedliche Lichtleitfasern eingekoppelt wird, wobei jede Lichtleitfaser zu einem separaten wellenlängenempfindlichen Detektor führt oder Lichtleitfasern gekoppelt und auf einen wellenlängenempfindlichen Detektor geführt werden, oder
- durch Einstellung der Neigung der Dichroide, wobei das jeweilige Licht am Dichroid reflektiertes Licht ist, und/oder durch Umlenkspiegel und/oder Optik auf weitestgehend selben Bereich eines wellenlängenempfindlichen Detektors gelenkt oder in eine zu einem wellenlängenempfindlichen Detektor führende Lichtleitfaser eingekoppelt wird.

8. Koordinatenmessgerät nach zumindest einem der vorhergehenden Ansprüche 1 bis 7,
**dadurch gekennzeichnet,**
**dass** erster und zweiter Strahlengang (601, 602) und damit erster und zweiter Sensor (610, 613) zueinander verschiedene Arbeitsabstände in Bezug auf die Frontoptik (604) aufweisen, wobei Arbeitsabstand des Bildverarbeitungssensors unabhängig von Arbeitsabstand des zweiten Sensors einstellbar ist, wobei insbesondere der zweite Strahlengang (602) zumindest eine Linse oder Linsengruppe (611, 612) enthält, durch die ein im Vergleich zum Strahlengang des Bildverarbeitungssensors abweichender, insbesondere kürzerer Arbeitsabstand realisiert wird.

9. Koordinatenmessgerät nach zumindest einem der vorhergehenden Ansprüche 1 bis 8,
**dadurch gekennzeichnet,**
**dass** der zweite Strahlengang (602) zumindest zwei separat verschiebbare Linsen (611, 612) oder Linsengruppen zur unabhängigen Einstellung von Arbeitsabstand und Abbildungsmaßstab umfasst, wobei Linsen oder Linsengruppen (611, 612) des zweiten Strahlengangs (602) unabhängig von Linsen oder Linsengruppen des ersten Strahlengangs bewegbar sind oder zumindest eine Linse oder Linsengruppe des ersten Strahlengangs mit zumindest einer Linse oder Linsengruppe des zweiten Strahlengangs gemeinsam bewegbar ist, besonders bevorzugt jeweils eine Linse oder Linsengruppe des ersten mit einer Linse oder Linsengruppe des zweiten Strahlengangs gemeinsam bewegbar ist.

10. Koordinatenmessgerät nach zumindest einem der vorhergehenden Ansprüche 1 bis 9,
**dadurch gekennzeichnet,**
**dass** vor der Frontoptik (604) ein biegeelastischer Taststift (626) mit zumindest einem Antastformelement (627) zur Berührung des Werkstücks (605) angeordnet ist oder anordenbar ist, wobei der Taststift zumindest eine dem Taststift bzw. Antastformelement zugeordnete vorzugsweise am oberen Ende des Taststifts angebrachte, erste Marke (628) aufweist, die durch den zweiten Strahlengang (602) des optischen Abstandssensors (613) erfasst wird, und wobei der Taststift vorzugsweise eine dem Taststift bzw. Antastformelement zugeordnete am Taststift oberhalb des Antastformelements angeordnete zweite Marke aufweist, wobei das Antastformelement oder die zweite Marke durch den Strahlengang des Bildverarbeitungssensors (610) erfasst wird und wobei erster und zweiter Sensor zueinander verschiedene Arbeitsabstände in Bezug auf die Frontoptik (604) aufweisen.

11. Verfahren zur geometrischen Bestimmung von Merkmalen, insbesondere Oberflächenmesspunkten, an einem Werkstück (605) unter Verwendung des Koordinatenmessgeräts nach zumindest Anspruch 1,
**dadurch gekennzeichnet,**
**dass** wahlweise mit dem Bildverarbeitungssensor (610) oder dem chromatischen Abstandssensor (613) Messpunkte direkt auf der Oberfläche des Werkstücks (605) aufgenommen werden, wobei mittels zumindest einem wellenlängenselektiven Teiler (603) dem Bildsensor des Bildverarbeitungssensors lediglich ein schmalbandiger Spektralbereich, und zwar maximal 100 Nanometer breiter, besonders bevorzugt maximal 50 Nanometer breiter Bereich, beispielsweise blauer Bereich zwischen etwa 450 und 500 Nanometern, des vom Werkstück reflektierten Lichtes zur Auswertung zugeführt wird, und mittels dem wellenlängenselektiven oder neutralen Teiler dem chromatischen Abstandssensor ein breitbandiger Spektralbereich oder mehrere Spektralbereiche des vom Werkstück reflektierten Lichtes zur Auswertung zugeführt werden.

12. Verfahren zur geometrischen Bestimmung von Merkmalen, insbesondere Oberflächenmesspunkten, an einem Werkstück (605) unter Verwendung des Koordinatenmessgeräts nach zumindest Anspruch 10,
**dadurch gekennzeichnet,**
**dass** Messpunkte bei Berührung des Antastformelementes (627) mit dem Werkstück (605) aufgenommen werden, wobei unterschiedliche lange Taststifte (626) einsetzbar sind, und der Arbeitsabstand des Bildverarbeitungssensors (613) auf die Länge des jeweils verwendeten Taststifts angepasst wird durch separates Verstellen von zumindest zwei im ersten Strahlengang (601) vorhandener Linsen oder Linsengruppen (606, 607), wobei vorzugsweise
- Linsen oder Linsengruppen des ersten Strahlengangs unabhängig von Linsen oder Linsengruppen (611, 612) des zweiten Strahlengangs (602) bewegt werden oder
- zumindest eine Linse oder Linsengruppe des ersten Strahlengangs mit zumindest einer Linse oder Linsengruppe des zweiten Strahlengangs gemeinsam bewegt werden oder
- jeweils eine Linse oder Linsengruppe des ersten mit einer Linse oder Linsengruppe des zweiten Strahlengangs gemeinsam bewegt wird.

## Claims

1. Coordinate measuring device (13) for geometrical determination of features, in particular of surface measurement points, on a workpiece (605), comprising an image processing sensor as a first sensor (610) with an image processing beam path (first beam path) (601), said first beam path comprising at least one front optical system (604) which faces the workpiece to be measured and is designed as an asphere and/or has a longitudinal chromatic aberration, and at least one wavelength-selective splitter (603) being arranged on that side of the front optical system facing away from the workpiece and by which a second beam path (602) is coupled with the image processing beam path, and a common beam path is formed in that light passing through the front optical system from the direction of the workpiece to be measured is at least partially decoupled from the common beam path into the second beam path, said second beam path being assigned to a chromatic distance sensor as a second sensor (613), the image processing sensor and the second sensor being designed for direct measurement of the workpiece surface (9) and/or for determining the deflection of a mark (628) or of one mark each assigned to an elastically bending feeler pin (626),
wherein
the wavelength-selective splitter (603) guides into the second beam path that part of the spectrum of the light which is not guided in the direction of the first sensor (610).

2. Coordinate measuring device according to claim 1,
wherein
the image processing sensor (610) has an image sensor such as a CCD or CMOS camera, and in the first beam path (601) between the image sensor and the splitter and/or between the front optical system (604) and the splitter (603) at least two separately displaceable lenses (606, 607) or lens groups are arranged for independent setting of the working distance and reproduction scale.

3. Coordinate measuring device according to claim 1 or 2,
wherein
the asphere has a marked chromatic aberration (longitudinal chromatic aberration), and a wavelength-sensitive detector such as a spectrometer is arranged in the second beam path (602), said wavelength-selective splitter being designed such that from the spectrum of the light impacting the splitter (603) from the direction of the workpiece (605) only a limited wavelength range is guided in the direction of the image processing sensor (610) of the image processing beam path (601),
- in that a splitter is designed such that it reflects or transmits the limited wavelength range above an upper limit wavelength, said upper limit wavelength preferably being greater than about 600 nanometers, whereby substantially red light passes in the direction of the image sensor, the splitter preferably being a dichroic filter, or
- in that a splitter is designed such that it reflects or transmits a limited wavelength range below a lower limit wavelength, said lower limit wavelength preferably being lower than about 500 nanometers, whereby substantially blue light passes in the direction of the image sensors, the splitter preferably being a dichroic filter, or
- in that a splitter is designed as a bandpass filter or bandstop filter such that it reflects or transmits the limited wavelength range above a lower limit wavelength and below an upper limit wavelength, said wavelength range being preferably almost monochromatic, preferably having a spectral width of at most 100 nanometers, particularly preferably of at most 50 nanometers, the splitter preferably comprising at least one interference filter.

4. Coordinate measuring device according to at least one of the preceding claims 1 to 3,
wherein
a neutral splitter is arranged for coupling of the second beam path (602) between the at least one wavelength-selective splitter (603) and the front optical system (604), said second beam path preferably comprising a broadband light source whose light is coupled in the direction of the workpiece (605), and particularly preferably the wavelength-selective splitter is a dichroic filter or color filter.

5. Coordinate measuring device according to at least one of the preceding claims 1 to 4,
wherein
for lighting of that area of the workpiece (605) or feeler pin (626) captured at least by the front optical system, at least one broadband light source (604, 615) and means for coupling into the first and/or second beam path (601, 602) are provided, and preferably at least one further light source and means for coupling into the first and/or second beam path are provided, the spectral proportion of the further light source largely corresponding to the limited wavelength range, which is guided by the wavelength-selective splitter in the direction of the image sensor.

6. Coordinate measuring device according to at least one of the preceding claims 1 to 5,
wherein
the asphere has a marked chromatic aberration (longitudinal chromatic aberration), and a wavelength-sensitive detector such as a spectrometer is arranged in the second beam path (602), two wavelength-selective splitters (620, 621), preferably dichroic filters, being arranged one behind the other in the common beam path and separating the spectrum of the light from the direction of the workpiece (605) impacting the splitters at a limit wavelength, i.e. reflecting above it and transmitting below it, or vice versa, the two splitters having different limit wavelengths, preferably with a difference in the limit wavelengths of less than 100 nanometers, particularly preferably of less than 50 nanometers, and the spectral range between the limit wavelengths is guided in the direction of the image processing sensor (610) and the remaining spectral range in the direction of the wavelength-sensitive detector (613).

7. Coordinate measuring device according to claim 6,
wherein
the light of the two spectral ranges not guided in the direction of the image processing sensor (610)
- is coupled in different optical fibers, each optical fiber leading to a separate wavelength-sensitive detector, or optical fibers are coupled and passed to a wavelength-sensitive detector, or
- by setting of the angle of the dichroic filters, the respective light at the dichroic filter being reflected light, and/or by deflection mirrors and/or by an optical system is guided to largely the same area of a wavelength-sensitive detector or is coupled into an optical fiber leading to a wavelength-sensitive detector.

8. Coordinate measuring device according to at least one of the preceding claims 1 to 7,
wherein
the first and second beam paths (601, 602) and hence the first and second sensors (610, 613) have working distances that differ from one another relative to the front optical system (604), the working distance of the image processing sensor being settable regardless of the working distance of the second sensor, in particular the second beam path (602) containing at least one lens or lens group (611, 612) by which a working distance is achieved which diverges in comparison with the beam path of the image processing sensor, in particular is shorter.

9. Coordinate measuring device according to at least one of the preceding claims 1 to 8,
wherein
the second beam path (602) comprises at least two separately displaceable lenses (611, 612) or lens groups for independent setting of working distance and reproduction scale, said lenses or lens groups (611, 612) of the second beam path (602) being movable independently of lenses or lens groups of the first beam path, or at least one lens or lens group of the first beam path being movable jointly with at least one lens or lens group of the second beam path, particularly preferably one lens or lens group each of the first beam path being movable jointly with one lens or lens group of the second beam path.

10. Coordinate measuring device according to at least one of the preceding claims 1 to 9,
wherein
an elastically bending feeler pin (626) with at least one shaped feeler element (627) for contact with the workpiece (605) is arranged or arrangeable in front of the front optical system (604), said feeler pin having at least one first mark (628) assigned to the feeler pin or shaped feeler element and attached preferably to the upper end of the feeler pin and captured by the second beam path (602) of the optical distance sensor (613), and said feeler pin preferably having a second mark assigned to the feeler pin or shaped feeler element arranged on the feeler pin above the shaped feeler element, said shaped feeler element or the second mark being captured by the beam path of the image processing sensor (610), and the first and the second sensors having working distances that differ from one another relative to the front optical system (604).

11. Method for geometrical determination of features, in particular surface measurement points, on a workpiece (605) using the coordinate measuring device according to at least claim 1,
wherein
measurement points are recorded directly from the surface of the workpiece (605) optionally with the image processing sensor (610) or with the chromatic distance sensor (613), where by means of at least one wavelength-selective splitter (603) only one narrowband spectral range, at most 100 nanometers wide, particularly preferably at most 50 nanometers wide, for example a blue range between around 450 and 500 nanometers, of the light reflected from the workpiece is supplied to the image sensor of the image processing sensor for evaluation, and by means of the wavelength-selective or neutral splitter a broadband spectral range or several spectral ranges of the light reflected from the workpiece is supplied to the chromatic distance sensor for evaluation.

12. Method for geometrical determination of features, in particular of surface measurement points, on a workpiece (605) using the coordinate measuring device according to at least claim 10,
wherein
measurement points are recorded upon contact of the shaped feeler element (627) with the workpiece (605), feeler pins (626) of differing length being usable, and the working distance of the image processing sensor (613) is adapted to the length of the respective feeler pin being used by separate adjustment of at least two lenses or lens groups (606, 607) provided in the first beam path (601), where preferably
- lenses or lens groups of the first beam path are moved independently of lenses or lens groups (611, 612) of the second beam path (602) or
- at least one lens or lens group of the first beam path is moved jointly with at least one lens or lens group of the second beam path or
- one lens or lens group each of the first beam path is moved jointly with one lens or lens group of the second beam path.

## Revendications

1. Appareil de mesure de coordonnées (13) pour la détermination géométrique de caractéristiques, notamment de points de mesure sur la surface d'une pièce (605), comprenant un capteur de traitement d'image servant de premier capteur (610) avec un trajet optique de traitement d'image (premier trajet optique) (601), sachant que le premier trajet optique comprend au moins une optique frontale (604) qui est tournée vers la pièce à mesurer et est constituée sous forme d'asphère et/ou présente un défaut longitudinal chromatique, et sachant qu'est disposé sur le côté opposé à la pièce, de l'optique frontale au moins un diviseur sélectif en longueur d'onde (603) par le biais duquel un second trajet optique (602) est couplé au trajet optique de traitement d'image et qu'est formé un trajet optique commun tandis que la lumière traversant l'optique frontale et provenant de la pièce à mesurer est découplée au moins partiellement du trajet optique commun pour former le second trajet optique, sachant que le second trajet optique est associé à un capteur de distance chromatique servant de second capteur (613), sachant que le capteur de traitement d'image et le second capteur sont conçus pour la mesure directe de la surface de la pièce (9) et/ou pour déterminer la déviation d'un repère ou respectivement d'un repère (628) associé à un palpeur (626) élastique en flexion,
**caractérisée en ce**
**que** le diviseur sélectif en longueur d'onde (603) conduit dans le second trajet optique la partie du spectre de la lumière qui n'est pas guidée en direction du premier capteur (610).

2. Appareil de mesure de coordonnées selon la revendication 1,
**caractérisée en ce**
**que** le capteur de traitement d'image (610) présente un capteur d'image tel qu'une caméra CCD ou CMOS et que sont disposés dans le premier trajet optique (601) entre le capteur d'image et le diviseur et/ou entre l'optique frontale (604) et le diviseur (603), au moins deux lentilles (606, 607) ou groupes de lentilles déplaçables séparément pour le réglage indépendant de la distance de travail et de l'échelle de reproduction.

3. Appareil de mesure de coordonnées selon la revendication 1 ou 2,
**caractérisée en ce**
**que** l'asphère présente une aberration chromatique prononcée (défaut longitudinal chromatique) et qu'un détecteur sensible aux longueurs d'onde ainsi qu'un spectromètre est disposé dans le second trajet optique (602) et sachant que le diviseur sélectif en longueur d'onde est conçu de sorte que ne soit conduit du spectre de la lumière rencontrant le diviseur (603) et provenant de la pièce (605) qu'une plage de longueur d'onde limitée en direction du capteur de traitement d'image (610) du trajet optique de traitement d'image (601),
- tandis qu'un diviseur est conçu de sorte à réfléchir ou laisser passer la plage de longueurs d'onde limitée, située au-dessus d'une longueur d'onde limite supérieure, sachant que la longueur d'onde limite supérieure est de préférence supérieure à environ 600 nanomètres si bien qu'essentiellement la lumière rouge parvient en direction du capteur d'image, sachant que le diviseur est de préférence un filtre dichroïque, ou
- tandis qu'un diviseur est conçu de sorte à réfléchir ou laisser passer une plage de longueur d'onde limitée, située en dessous d'une longueur d'onde limite inférieure, sachant que la longueur d'onde limite inférieure est de préférence inférieure à environ 500 nanomètres si bien qu'essentiellement de la lumière bleue parvient en direction du capteur d'image, sachant que le diviseur est de préférence un filtre dichroïque, ou
- tandis qu'un diviseur est conçu sous forme de passe-bande ou de filtre à suppression de bande de sorte à réfléchir ou laisser passer la plage de longueur d'onde limitée, située au-dessus d'une longueur d'onde inférieure et en dessous d'une longueur d'onde supérieure, sachant que la plage de longueur d'onde est de préférence presque monochrome, qu'elle présente de préférence une largeur spectrale de 100 nanomètres maximum, notamment de préférence 50 nanomètres maximum, sachant que le diviseur comprend de préférence au moins un filtre d'interférence.

4. Appareil de mesure de coordonnées selon au moins une des revendications précédentes 1 à 3,
**caractérisée en ce**
**qu'**est disposé, entre ledit au moins un diviseur sélectif en longueur d'onde (603) et l'optique frontale (604), un diviseur neutre pour le couplage du second trajet optique (602), sachant que le second trajet optique comprend de préférence une source lumineuse à large bande dont la lumière est couplée en direction de la pièce (605), et que notamment de préférence, le diviseur sélectif en longueur d'onde est un filtre dichroïque ou filtre chromatique.

5. Appareil de mesure de coordonnées selon au moins une des revendications précédentes 1 à 4,
caractérisée en ce
pour éclairer la zone de la pièce (605) ou du palpeur (626) au moins acquise par l'optique frontale, il existe au moins une source lumineuse à large bande (604, 615) et des moyens pour coupler dans le premier et/ou le second trajet optique (601, 602), et qu'il existe de préférence au moins une autre source lumineuse et des moyens pour coupler dans le premier et/ou le second trajet optique, sachant que la part spectrale de l'autre source lumineuse coïncide en grande partie à la plage de longueur d'onde limitée qui est conduite par le diviseur sélectif en longueur d'onde en direction du capteur d'image.

6. Appareil de mesure de coordonnées selon au moins une des revendications précédentes 1 à 5,
**caractérisée en ce**
**que** l'asphère présente une aberration chromatique prononcée (défaut longitudinal chromatique) et qu'un détecteur sensible aux longueurs d'onde tel qu'un spectromètre est disposé dans le second trajet optique (602), et sachant que sont disposés successivement dans le trajet optique commun deux diviseurs sélectifs en longueur d'onde (620, 621), de préférence des filtres dichroïques, qui divisent le spectre de la lumière rencontrant les diviseurs et provenant de la pièce (605), respectivement à une longueur d'onde limite, c'est-à-dire qui réfléchissent le spectre au-dessus de celle-ci et laissent passer le spectre en dessous de celle-ci ou inversement, sachant que les deux diviseurs possèdent différentes longueurs d'onde limites, que de préférence la différence des longueurs d'onde limites est inférieure à 100 nanomètres, notamment de préférence inférieure à 50 nanomètres, et que la plage spectrale entre les longueurs d'onde limites est conduite en direction du capteur de traitement d'image (610) et que la zone spectrale restante est conduite en direction du détecteur sensible aux longueurs d'onde (613).

7. Appareil de mesure de coordonnées selon la revendication 6,
**caractérisée**
**en ce que** la lumière des deux zones spectrales non conduites en direction du capteur de traitement d'image (610)
- est couplée dans différentes fibres optiques, sachant que chaque fibre optique conduit à un détecteur séparé, sensible en longueur d'onde ou que des fibres optiques sont couplées et conduites sur un détecteur sensible en longueur d'onde, ou
- par le réglage de l'inclinaison du filtre dichroïque, sachant que la lumière respective est la lumière réfléchie sur le filtre dichroïque, et/ou par un miroir de déviation et/ou une optique sur principalement la même zone d'un détecteur sensible en longueur d'onde ou est couplée dans une fibre optique conduisant à un détecteur sensible en longueur d'onde.

8. Appareil de mesure de coordonnées selon au moins une des revendications précédentes 1 à 7,
**caractérisée en ce**
**que** le premier et le second trajets optiques (601, 602) et donc le premier et le second capteurs (610, 613) présentent différents écarts de travail l'un par rapport à l'autre concernant l'optique frontale (604), sachant que l'écart de travail du capteur de traitement d'image est réglable indépendamment de l'écart de travail du second capteur, sachant que le second trajet optique (602) contient au moins une lentille ou un groupe de lentilles (611, 612) au moyen de laquelle ou duquel est réalisé un écart de travail différent, notamment plus court en comparaison du trajet optique du capteur de traitement d'image.

9. Appareil de mesure de coordonnées selon au moins une des revendications précédentes 1 à 8,
**caractérisée en ce**
**que** le second trajet optique (602) comprend au moins deux lentilles ou groupes de lentilles déplaçables séparément (611, 612) pour le réglage indépendant de l'écart de travail et de l'échelle de reproduction, sachant que des lentilles ou groupes de lentilles (611, 612) du second trajet optique (602) sont mobiles indépendamment des lentilles ou groupes de lentilles du premier trajet optique ou qu'au moins une lentille ou un groupe de lentille du premier trajet optique est mobile conjointement à au moins une lentille ou un groupe de lentilles du second trajet optique, notamment que de préférence, respectivement une lentille ou un groupe de lentille du premier trajet optique est déplaçable conjointement avec une lentille ou un groupe de lentilles du second trajet optique.

10. Appareil de mesure de coordonnées selon au moins une des revendications précédentes 1 à 9,
**caractérisée en ce**
**qu'**est disposé ou que peut être disposé, devant une optique frontale (604), un palpeur élastique en flexion (626) avec au moins un élément palpeur façonné (627) pour toucher la pièce (605), sachant que le palpeur présente au moins un premier repère (628) apposé de préférence sur l'extrémité supérieure du palpeur, associé au palpeur ou élément palpeur façonné, lequel repère est acquis par le biais du second trajet optique (602) du capteur de distance optique (613), et sachant que le palpeur présente de préférence un second repère disposé sur le palpeur au-dessus de l'élément palpeur façonné, associé au palpeur ou à l'élément palpeur façonné, sachant que l'élément palpeur façonné ou le second repère est acquis par le biais du trajet optique du capteur de traitement d'image (610) et sachant que le premier et le second capteurs présentent différents écarts de travail les uns par rapport aux autres concernant l'optique frontale (604).

11. Procédé pour la détermination géométrique des caractéristiques, notamment des points de mesure sur la surface d'une pièce (605) en utilisant l'appareil de mesure des coordonnées selon au moins la revendication 1,
**caractérisé en ce**
**que** des points de mesure sont enregistrés directement sur la surface de la pièce (605) au choix avec le capteur de traitement d'image (610) ou le capteur de distance chromatique (613), sachant qu'au moyen d'au moins un diviseur sélectif en longueur d'onde (603), une seule plage spectrale à bande étroite, et en l'occurrence une plage large de 100 nanomètres au maximum, notamment de préférence de 50 nanomètres maximum, par exemple une plage bleue comprise entre 450 et 500 nanomètres, de la lumière réfléchie par la pièce est délivrée au capteur d'image du capteur de traitement d'image pour être évaluée et qu'au moyen du diviseur sélectif en longueur d'onde ou du diviseur neutre, une plage spectrale à large bande ou plusieurs plages spectrales de la lumière réfléchie par la pièce sont délivrées au capteur de distance chromatique pour être évaluées.

12. Procédé pour la détermination géométrique des caractéristiques, notamment des points de mesure sur la surface d'une pièce (605) en utilisant l'appareil de mesure des coordonnées selon au moins la revendication 10,
**caractérisé en ce**
**que** des points de mesure sont enregistrés lors du contact de l'élément palpeur façonné (627) avec la pièce (605), sachant que des palpeurs de différentes longueurs (626) sont utilisables, et que la distance de travail du capteur de traitement d'image (613) est adaptée à la longueur du palpeur utilisé respectivement, au moyen d'un réglage séparé d'au moins deux lentilles ou groupes de lentilles (606, 607) présents dans le premier trajet optique (601), sachant que de préférence
- des lentilles ou groupes de lentilles du premier trajet optique sont déplacés indépendamment des lentilles ou groupes de lentilles (611, 612) du second trajet optique (602) ou
- **qu'**au moins une lentille ou un groupe de lentilles du premier trajet optique sont déplacés conjointement avec au moins une lentille ou un groupe de lentilles du second trajet optique ou
- **que** respectivement une lentille ou un groupe de lentilles du premier trajet optique sont déplacés conjointement avec au moins une lentille ou un groupe de lentilles du second trajet optique.
